# EUROPEAN PATENT APPLICATION

(11) **EP 4 494 891 A1**
(43) Date of publication of application: **22.01.2025**
(21) Application number: 23770809.4
(22) Date of filing: 14.03.2023
(51) Int. Cl.: B42D 15/00, B32B 27/18, B41M 5/26, B42D 25/24, B42D 25/41, B32B 27/36

(54) **LAMINATE, CARD, PASSPORT, MANUFACTURING METHOD THEREOF, AND LASER MARKING METHOD**

(30) Priority: 15.03.2022 JP 2022040746
(71) Applicant: Mitsubishi Chemical Corporation, Tokyo 100-8251 (JP)
(72) Inventor: TEZUKA, Rie, Tokyo 100-8251 (JP); SHIGETOMI, Kiyoe, Tokyo 100-8251 (JP)
(74) Representative: Hoffmann Eitle
(86) International application number: PCT/JP2023/009954
(87) International publication number: WO 2023/176856

(57) **Abstract**

A laminate (21) includes at least two layers of color developing layers (11A and 11B) that develop different colors from each other, the at least two layers of color developing layers (11A and 11B) each containing a resin and a coloring agent, the at least two layers of color developing layers (11A and 11B) each having a content of the coloring agent of less than 10 parts by mass per 100 parts by mass of the resin.

## Description

### Technical Field

The present invention relates to a laminate, a card, and a passport, and for example, relates to a laminate capable of being used for laser marking or the like, and a card and a passport having the laminate.

### Background Art

Various cards, such as credit cards, cash cards, ID cards, and tag cards, and a passport may be marked with letters, bar codes, symbols, marks, and the like through laser irradiation. While the laser marking is being available in monochrome, color laser marking using a leuco colorant or the like is being investigated in recent years. In the color laser marking, it has been known that, for example, a resin composition containing a thermoplastic polymer, a coloring component, such as a leuco colorant, and a developer is used as a composition for marking (see, for example, PTL 1).

### Citation List

### Patent Literature

PTL 1: JP 9-302236 A

### Summary of Invention

### Technical Problem

By the way, there is a demand for color laser printing of photographs on a card and a passport, and multiple color laser printing is being demanded in recent years. According to the trend, there is an increasing demand of providing a material capable of being marked through multiple colors laser marking.

Under the circumstances, a problem to be solved by the present invention is to provide a material capable of being marked through multiple colors laser marking.

### Solution to Problem

The present inventors have made earnest investigations, and as a result, have found that the problem can be solved by a multilayer structure having layers each having a particular structure, and thus the present invention has been completed. Specifically, the present invention provides the following items [1] to [52]
[1] A laminate including at least two layers that develop different colors from each other,
   the at least two layers each containing a resin and a coloring agent,
   the at least two layers each having a content of the coloring agent of less than 10 parts by mass per 100 parts by mass of the resin.
[2] A laminate including at least two layers that develop different colors from each other,
   the at least two layers each containing a resin and a coloring agent,
   a resin composition excluding the coloring agent in at least one layer of the at least two layers having an absorption peak of a light transmission spectrum in a wavelength range of 235 nm or more and 475 nm or less.
[3] A laminate including at least two layers that develop different colors from each other,
   the at least two layers each containing a resin and a coloring agent,
   the resin in at least one layer of the at least two layers containing a polycarbonate resin containing a structural unit derived from a dihydroxy compound having a moiety represented by the following formula (1) in a part of a structure: 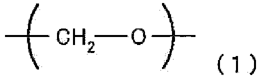 provided that a case where the moiety represented by the formula (1) is a part of -CH₂-O-H is excluded.
[4] The laminate according to the item [2] or [3], in which the at least two layers each have a content of the coloring agent of less than 10 parts by mass per 100 parts by mass of the resin.
[5] The laminate according to any one of the items [1] to [4], in which at least one layer of the at least two layers contains an ultraviolet ray absorbent.
[6] The laminate according to any one of the items [1] to [5], in which at least one layer of the at least two layers has a thickness of more than 5 µm and 320 µm or less.
[7] The laminate according to any one of the items [1] to [6], in which the at least two layers are directly laminated.
[8] The laminate according to any one of the items [1] to [7], in which the coloring agent is a leuco colorant.
[9] The laminate according to any one of the items [1] to [8], in which at least one layer of the at least two layers contains a developer.
[10] The laminate according to the item [9], in which the at least one layer has a content of the developer of 30 parts by mass or less per 100 parts by mass of the resin.
[11] The laminate according to the item [9] or [10], in which the developer has a thermal decomposition temperature of 200°C or more.
[12] The laminate according to any one of the items [9] to [11], in which the developer has a crystalline melting temperature of 100°C or more.
[13] The laminate according to any one of the items [9] to [12], in which the developer has a crystalline melting temperature of 350°C or less.
[14] The laminate according to any one of the items [9] to [13], in which the developer is an organic halogen compound.
[15] The laminate according to any one of the items [1] to [14], in which the coloring agent has a thermal decomposition temperature of 200°C or more.
[16] The laminate according to any one of the items [1] to [15], in which the coloring agent has a crystalline melting temperature of 100°C or more.
[17] The laminate according to any one of the items [1] to [16], in which the coloring agent has a crystalline melting temperature of 300°C or less.
[18] The laminate according to any one of the items [1] to [17], in which a resin composition excluding the coloring agent in at least one layer of the at least two layers has an absorption peak of a light transmission spectrum in a wavelength range of 235 nm or more and 475 nm or less.
[19] The laminate according to any one of the items [1] to [18], in which the resin in at least one layer of the at least two layers contains a thermoplastic resin.
[20] The laminate according to any one of the items [1] to [19], in which the resin in at least one layer of the at least two layers contains at least one kind selected from the group consisting of a polycarbonate resin, a polyester resin, a polyolefin resin, and an acrylic resin.
[21] The laminate according to any one of the items [1] and [3] to [20], in which the resin in at least one layer of the at least two layers contains a resin having an absorption peak of a light transmission spectrum in a wavelength range of 235 nm or more and 475 nm or less.
[22] The laminate according to any one of the items [1] to [21], in which the resin in at least one layer of the at least two layers contains a bisphenol based polycarbonate resin.
[23] The laminate according to any one of the items [1], [2], and [4] to [22], in which the resin in at least one layer of the at least two layers contains a polycarbonate resin containing a structural unit derived from a dihydroxy compound having a moiety represented by the following formula (1) in a part of a structure: 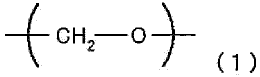 provided that a case where the moiety represented by the formula (1) is a part of -CH₂-O-H is excluded.
[24] The laminate according to any one of the items [1] to [6] and [8] to [23], including an intermediate layer between one pair of layers adjacent to each other in the at least two layers.
[25] The laminate according to any one of the items [1] to [24], in which the laminate is capable of developing multiple colors through irradiation of laser light having any one wavelength in a wavelength range of 200 nm or more and 1,500 nm or less.
[26] The laminate according to the item [25], in which the wavelength is less than 780 nm.
[27] The laminate according to any one of the items [1] to [26], in which the different colors are at least two selected from a cyan color, a magenta color, and a yellow color.
[28] The laminate according to any one of the items [1] to [27], in which the laminate has an area of 400 cm² or less.
[29] The laminate according to any one of the items [1] to [28], in which the laminate has an area of 200 cm² or less.
[30] The laminate according to any one of the items [1] to [29], in which the laminate is used in a card.
[31] The laminate according to any one of the items [1] to [29], in which the laminate is used in a passport.
[32] A card including the laminate according to any one of the items [1] to [30].
[33] A passport including the laminate according to any one of the items [1] to [29] and [31].
[34] A method of producing the laminate according to any one of the items [1] to [31], including melt-kneading at least a resin and a coloring agent to produce at least two resin compositions, and forming the at least two layers with the resin compositions, respectively.
[35] The method of producing the laminate according to the item [34], in which the method includes a step of laminating the at least two layers.
[36] The method of producing the laminate according to the item [35], in which the step of laminating the at least two layers is performed by an extrusion method or a lamination method.
[37] A method of producing a laminate including at least two layers that develop different colors from each other,
   the method of producing a laminate including melt-kneading at least a resin and a coloring agent to produce at least two resin compositions, and laminating layers formed from the resin composition by an extrusion method or a lamination method, so as to produce the laminate.
[38] The method of producing the laminate according to the item [37], in which at least a resin and a coloring agent are melt-kneaded at 140°C or more and 350°C or less.
[39] The method of producing the laminate according to the item [37] or [38], a temperature when the layers are laminated by an extrusion method or a lamination method is 140°C or more and 350°C or less.
[40] A laser marking method including laser marking the laminate according to any one of the items [1] to [31] through laser irradiation.
[41] A laser marking method including laser marking a laminate produced by the method of producing a laminate according to any one of the items [34] to [39] through laser irradiation.
[42] The laser marking method according to the item [40] or [41], in which the laser marking is performed through inner marking to allow at least one layer of the at least two layers to develop color.
[43] The laser marking method according to any one of the items [40] to [42], in which at least one layer of the at least two layers contains a resin having an absorption peak in a wavelength range of (λ-120) nm or more and (λ+120) nm or less, in which λ nm represents a wavelength of laser light used in the laser irradiation.
[44] The laser marking method according to any one of the items [40] to [43], in which a resin composition excluding the coloring agent in the at least one layer of the at least two layers has an absorption peak in a wavelength range of (λ-120) nm or more and (λ+120) nm or less, in which λ nm represents a wavelength of laser light used in the laser irradiation.
[45] A method of producing a card including the laminate according to any one of the items [1] to [30],
   the method of producing a card including at least a step of laminating and fusing the laminate with another film, and a step of laser marking through laser irradiation.
[46] A method of producing a passport including the laminate according to any one of the items [1] to [29] and [31],
   the method of producing a passport including at least a step of laminating and fusing the laminate with another film, and a step of laser marking through laser irradiation.
[47] A method of using the laminate according to any one of the items [1] to [31] in a card or a passport, including laser marking the laminate.
[48] Use of the laminate according to any one of the items [1] to [31] in a card or a passport, including laser marking the laminate.
[49] A laser marking method including laser marking a laminate including at least two layers that develop different colors from each other,
   the laser marking being performed through inner marking to allow at least one layer of the at least two layers to develop color.
[50] The laser marking method according to the item [49], in which the laser marking method is capable of developing multiple colors through irradiation of laser light having one wavelength.
[51] The laser marking method according to the item [49] or [50], in which at least one layer of the at least two layers contains a resin having an absorption peak in a wavelength range of (λ-120) nm or more and (λ+120) nm or less, in which λ nm represents a wavelength of laser light used in the inner marking.
[52] The laser marking method according to any one of the items [49] to [51], in which a resin composition excluding the coloring agent in the at least one layer of the at least two layers has an absorption peak in a wavelength range of (λ-120) nm or more and (λ+120) nm or less, in which λ nm represents a wavelength of laser light used in the inner marking.

### Advantageous Effects of Invention

The present invention can provide a laminate capable of being marked through multiple colors laser marking.

### Brief Description of Drawings

Fig. 1 is a schematic cross sectional view showing one example of a laminate.
Fig. 2 is a schematic cross sectional view showing one example of the laminate.
Fig. 3 is a schematic cross sectional view showing one example of the laminate.
Fig. 4 is a schematic cross sectional view showing one example of the laminate.
Fig. 5 is a graph showing the light transmission spectra of the resins used in the examples.

### Description of Embodiments

The present invention will be described in detail with reference to embodiments below. However, the present invention is not limited to the embodiments described below.

### <Laminate>

The laminate of the present invention includes at least two layers that develop different colors from each other, and preferably includes at least three layers that develop different colors from each other. The laminate of the present invention includes at least two layers that develop different colors from each other, and thereby enables to develop multiple colors by allowing the laminate to develop colors by appropriately selecting the layers developing colors, for example, through irradiation of laser light selectively on each layer. Mixed color can also be developed by allowing two layers to develop colors in the same region (i.e., the same position on the x-y plane of the laminate described later). Full color can also be developed by providing at least three layers that develop different colors from each other.

In the following description, layers developing colors may be generically referred to as a "color developing layer". Two layers that develop different colors from each other may be referred to as a layer (A) and a layer (B), and a layer that develops different color from the layers (A) and (B) may be referred to as a layer (C).

The color developing layers in the laminate preferably have laser color developability, and specifically the color developing layer is preferably a layer that develops color through irradiation of laser light. The laminate of the present invention includes color developing layers that each have laser color developability, and thereby can develop multiple colors, and also can develop full color, through laser irradiation. It is preferred that, as described later, the color developing layers each contain a coloring agent, in which the coloring agent develops color by heating through laser irradiation, and it is more preferred that the color developing layers each contains a coloring agent and a developer, in which the developer and the coloring agent are reacted by heating to allow the coloring agent to develop color. In the case where the color developing layers each contain a coloring agent and a developer, it is more preferred that the developer becomes a proton donor through laser irradiation, and the developer and the coloring agent are reacted to allow the coloring agent to develop color.

It is preferred that the laminate is capable of developing multiple colors through irradiation of laser light having any one wavelength in a range (wavelength range) of 200 nm or more and 1,500 nm or less. Therefore, it is preferred that the multiple color developing layers in the laminate (i.e., the layers (A) and (B), or the layers (A), (B), and (C)) are all capable of developing color through irradiation of the laser light having one wavelength. The wavelength range is preferably 250 nm or more and 1,200 nm or less, and more preferably 300 nm or more and 900 nm or less. The wavelength range is preferably the visible light region or the ultraviolet ray region from the standpoint of the large energy thereof facilitating the color development and the suitability thereof to inner marking, and therefore is also preferably less than 780 nm. The wavelength range is also preferably 250 nm or more and less than 780 nm, more preferably 300 nm or more and 600 nm or less, further preferably 320 nm or more and 500 nm or less, and still further preferably 340 nm or more and 400 nm or less. In the case where the laminate can develop multiple color through irradiation of the laser light having one prescribed wavelength, the apparatus for laser marking the laminate can be simplified. More specifically, for example, as described later, multiple color developing layers can be allowed to develop colors with one laser module. The laser light used is generally monochromic with a short wavelength excellent in monochromaticity, and in the case where the light spectrum thereof has a width, the peak top of the spectrum is defined as the "wavelength" of the laser light.

For enabling the color developing layers to develop colors with light having one prescribed wavelength as described above, it is preferred that a coloring agent and a developer are contained in each of the color developing layers, while appropriately selecting the kinds of the coloring agent and the developer, or adding a photothermal conversion agent to each of the color developing layers, and appropriately selecting the kinds of the photothermal conversion agent.

It is preferred that the colors developed by the color developing layers are selected, for example, from a cyan color, a magenta color, and a yellow color, and it is more preferred that the different colors from each other described above are at least two selected from a cyan color, a magenta color, and a yellow color. The color developing layers of the laminate preferably include color developing layers that develop a cyan color, a magenta color, and a yellow color, respectively. The color developing layers that develop these three colors included enable full color development with higher quality.

The color developing layers can develop a cyan color, a magenta color, and a yellow color, for example, by containing a cyan coloring agent, a magenta coloring agent, and a yellow coloring agent, respectively, in the color developing layers, as described later.

The color developing layers in the laminate each are a resin layer, which contains a resin and a coloring agent, and preferably further contains a developer. In each of the color developing layers, it is preferred that the coloring agent, or the coloring agent and the developer, are dispersed or dissolved in the resin constituting each of the color developing layer.

The resin used in each of the color developing layer may be a thermosetting resin or a thermoplastic resin, and is preferably a thermoplastic resin. Specifically, it is preferred that the resin in at least one layer of the layers (A) and (B) or the layers (A), (B), and (C) is a thermoplastic resin, and it is more preferred that the resins in the layers each are a thermoplastic resin. The use of a thermoplastic resin as the resins in the color developing layers enables the formation of the color developing layers through melt film formation or the like, and also enables the formation of the laminate through co-extrusion, press molding, or the like, resulting in high moldability and productivity.

The use of a thermoplastic resin also avoids the necessity of the formation of the color developing layers through paint coating, and thereby the color developing layers can be prevented from being scraped or released off in processing and use as an actual product. Therefore, the laminate is excellent in storage stability, and is suitable for a passport and a card from the standpoint of security (reliability).

### [Thermoplastic Resin]

The thermoplastic resin used in the color developing layer is not particularly limited, and examples thereof include a polycarbonate resin, a polyester resin, a polyolefin resin, an acrylic resin, a polystyrene resin, a polyamide resin, a polyvinyl chloride resin, a polyvinylidene chloride resin, a polyvinyl alcohol resin, an ethylene-vinyl alcohol resin, a polycycloolefin resin, an ethylene-vinyl acetate copolymer resin, an ethylene-(meth)acrylate copolymer resin, a polyphenylene ether resin, a polyacetal resin, an acrylonitrile-butadiene-styrene copolymer resin, a polyaryl ether ketone resin, a polyimide resin, a polyphenylene sulfide resin, a polyarylate resin, a polysulfone resin, a polyether sulfone resin, and a fluorine resin.

Among these, it is preferred that the resin in at least one layer of the color developing layers contains any of a polycarbonate resin, a polyester resin, a polyolefin resin, and an acrylic resin, and it is more preferred that any of a polycarbonate resin, a polyester resin, a polyolefin resin, and an acrylic resin is used in each of the color developing layers. The use of these resins facilitates the formation of the laminate having high transparency. It is more preferred to use any of a polycarbonate resin, a polyester resin, and an acrylic resin from the standpoint of improving the laser color developability.

The use of at least any of a polycarbonate resin and a polyester resin, particularly a polycarbonate resin, in each of the color developing layers facilitates the securement of the mechanical strength to a certain level or higher, and thereby the laminate can be favorably used in a card or a passport, and can be prevented from suffering color development of the color developing layers in producing the laminate. The use of an acrylic resin in each of the color developing layers facilitates the enhancement of the color developability through laser irradiation. Furthermore, any of a polycarbonate resin and an acrylic resin is further preferred from the standpoint that the resin allows a resin composition (X) and a resin composition (Y) described later in the color developing layer to have an absorption peak at 235 nm or more and 475 nm or less as described later.

One kind of the thermoplastic resin may be used alone in each of the color developing layers, or two or more kinds thereof may be used in combination.

The color developing layers each preferably contain any one of a polycarbonate resin, a polyester resin, a polyolefin resin, or an acrylic resin as a major component. Specifically, the color developing layers each preferably contain any one of a polycarbonate resin, a polyester resin, a polyolefin resin, or an acrylic resin in an amount of 50% by mass or more and 100% by mass or less, more preferably 70% by mass or more and 100% by mass or less, and further preferably 90% by mass or more and 100% by mass or less, based on the total amount of the resin contained in each of the color developing layers.

### (Polycarbonate Resin)

The polycarbonate resin used in at least one layer of the color developing layers is not particularly limited, and a bisphenol based polycarbonate resin is preferably used, in which it is more preferred that a bisphenol based polycarbonate resin is used in each of the color developing layers. The bisphenol based polycarbonate resin contains a bisphenol in an amount of 50% by mol or more, preferably 70% by mol or more, and more preferably 90% by mol or more, in the structural units derived from a diol. The bisphenol based polycarbonate resin may be either a homopolymer or a copolymer. The bisphenol based polycarbonate resin may have a branched structure or a linear structure, or may be a mixture of a resin having a branched structure and a resin having only a linear structure. The bisphenol based polycarbonate resin is preferred from the standpoint that a good mechanical strength and a good heat resistance can be easily obtained, and also has advantages that high transparency can be obtained to retain high transparency of the laminate, the color developability tends to be good, and the raw materials thereof are easily available.

The production method of the bisphenol based polycarbonate resin used in the present invention may be any known method, such as the phosgene method, the ester exchange method, and the pyridine method. As one example, the production method of the polycarbonate resin by the ester exchange method is described below.

The ester exchange method is a production method in which a basic catalyst and an acidic substance neutralizing the basic catalyst are added to a bisphenol and a carbonate diester, and melt ester exchange polycondensation is performed.

As a representative examples of the bisphenol, 2,2-bis(4-hydroxyphenyl)propane, i.e., bisphenol A, is preferably used, and a part or the whole of bisphenol A may be replaced by another bisphenol.

Specific examples of the bisphenol include , 2,2-bis(4-hydroxyphenyl)propane (bisphenol A), 1,1-bis(4-hydroxyphenyl)-1-phenylethane (bisphenol AP), 2,2-bis(4-hydroxyphenyl)hexafluoropropane (bisphenol AF), 2,2-bis(4-hydroxyphenyl)butane (bisphenol B), bis(4-hydroxyphenyl)diphenylmethane (bisphenol BP), 2,2-bis(3-methyl-4-hydroxyphenyl)propane (bisphenol C), 1,1-bis(4-hydroxyphenyl)ethane (bisphenol E), bis(4-hydroxyphenyl)methane (bisphenol F), 2,2-bis(4-hydroxy-3-isoprpylphenyl)propane (bisphenol G), 1,3-bis(2-(4-hydroxyphenyl)-2-propyl)benzene (bisphenol M), bis(4-hydroxyphenyl)sulfone (bisphenol S), 1,4-bis(2-(4-hydroxyphenyl)-2-propyl)benzene (bisphenol P), 5,5'-(1-methylethylidene)-bis[1,1'-(bisphenyl)-2-ol]propane (bisphenol PH), 1,1-bis(4-hydroxyphenyl)-3,3,5-trimethylcyclohexane (bisphenol TMC), and 1,1-bis(4-hydroxyphenyl)cyclohexane (bisphenol Z).

Representative examples of the carbonate diester include diphenyl carbonate, ditolyl carbonate, bis(chlorophenyl) carbonate, m-cresyl carbonate, dinaphthyl carbonate, bis(biphenylyl) carbonate, diethyl carbonate, dimethyl carbonate, dibutyl carbonate, and dicyclohexyl carbonate. Among these, diphenyl carbonate is particularly preferably used.

The mass average molecular weight of the bisphenol based polycarbonate resin used in the present invention is generally in a range of 10,000 or more and 100,000 or less, and preferably in a range of 30,000 or more and 80,000 or less, from the standpoint of the balance between the mechanical characteristics and the molding workability. The mass average molecular weight can be measured by gel permeation chromatography (GPC) with polystyrene as the standard substance.

The viscosity average molecular weight of the bisphenol based polycarbonate resin is generally in a range of 12,000 or more and 40,000 or less, preferably in a range of 15,000 or more and 35,000 or less, more preferably in a range of 20,000 or more and 30,000 or less, and further preferably in a range of 22,000 or more and 28,000 or less, from the standpoint of the balance between the mechanical characteristics and the molding workability. The viscosity average molecular weight can be measured in such a manner that the limiting viscosity (η) (unit: dL/g) at a temperature of 20°C is measured with an Ubbelohde viscometer with dichloromethane as a solvent, and the viscosity average molecular weight is calculated from the Schnell's viscosity equation: η = 1.23 × 10⁻⁴M^{0.83}.

It is also preferred that the polycarbonate resin used in the at least one layer of the color developing layers is a polycarbonate resin containing a structural unit derived from a dihydroxy compound having a moiety represented by the following formula (1) in a part of the structure, and it is also more preferred that the polycarbonate resins used in each of the color developing layers of the laminate each are a polycarbonate resin containing a structural unit derived from a dihydroxy compound having a moiety represented by the following formula (1) in a part of the structure. With the use of the polycarbonate resin, color development with a sufficient density can be obtained through laser irradiation, to enable marking of clear letters, images, and the like. Furthermore, a laminate for laser marking can be obtained that is excellent in surface hardness, heat resistance, and weather resistance, and in which a resin material derived from plants is used.

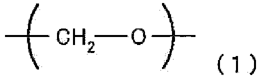

However, the case where the moiety represented by the formula (1) is a part of -CH₂-O-H is excluded. Specifically, the dihydroxy compound at least has two hydroxy groups and a moiety represented by the formula (1).

The dihydroxy compound having a moiety represented by the formula (1) in a part of the structure is not particularly limited, as long as having a structure represented by the formula (1) in a molecule, and specific examples thereof include a dihydroxy compound represented by the following formula (2) and a dihydroxy compound having a cyclic ether structure represented by a spiroglycol represented by the following formula (3).

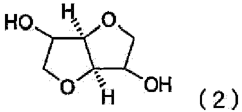

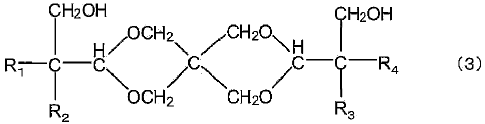

In the formula (3), R₁ to R₄ each independently represent an alkyl group having 1 to 3 carbon atoms.

Examples thereof also include a compound having an aromatic group on the side chain and an ether group bonded to the aromatic group on the main chain, such as 9,9-bis(4-(2-hydroxyethoxy)phenyl)fluorene and 9,9-bis(4-(2-hydroxyethoxy)substituted phenyl)fluorene (in which examples of the substituent in the substituted phenyl include a linear or branched alkyl group having approximately 1 to 6 carbon atoms, a cycloalkyl group, and an aryl group, such as a phenyl group).

Among the above, a dihydroxy compound having a cyclic ether structure is preferred, and an anhydrosugar alcohol represented by the formula (2) is particularly preferred. More specific examples of the dihydroxy compound represented by the formula (2) include isosorbide, isomannide, and isoidide, which are in the stereoisomeric relationship.

These compounds may be used alone, or a combination of two or more kinds thereof may be used.

In the case where the polycarbonate resin has a structural unit derived from a dihydroxy compound having a moiety represented by the formula (1) in a part of the structure, a structural unit other than that structural unit may be contained, and it is preferred that a structural unit derived from at least one kind of a dihydroxy compound selected from an aliphatic dihydroxy compound and an alicyclic dihydroxy compound is contained.

Examples of the aliphatic dihydroxy compound include an aliphatic dihydroxy compound having approximately 2 to 12 carbon atoms, and preferred examples thereof include at least one kind selected from ethylene glycol, 1,3-propanediol, 1,4-butanediol, 1,5-pentanediol, and 1,6-hexanediol. Examples of the structural unit derived from an aliphatic dihydroxy compound used also include those described in WO 2004/111106.

The structural unit derived from alicyclic dihydroxy compound preferably contains any of a 5-membered ring structure and a 6-membered ring structure, and particularly the 6-membered ring structure may be fixed to a chair form or a boat form with a covalent bond. The structural unit derived from an alicyclic dihydroxy compound having the structure can enhance the heat resistance of the resulting polycarbonate resin.

The number of carbon atoms contained in the alicyclic dihydroxy compound is, for example, 5 to 70, preferably 6 to 50, and more preferably 8 to 30.

Preferred examples of the alicyclic dihydroxy compound include at least one kind selected from cyclohexanedimethanol, tricyclodecanedimethanol, adamantanediol, and pentacyclopentadecanedimethanol, in which cyclohexanedimethanol and tricyclodecanedimethanol are more preferred, and cyclohexanedimethanol is further preferred, from the standpoint of the economic efficiency and the heat resistance. Cyclohexanedimethanol is preferably 1,4-cyclohexanedimethanol due to the good industrial availability thereof.

Examples of the structural unit derived from an alicyclic dihydroxy compound used also include those described in WO 2007/148604.

In the case where the polycarbonate resin has a structural unit derived from a dihydroxy compound having a moiety represented by the formula (1) in a part of the structure, a structural unit derived from another dihydroxy compound other than the structural unit derived from the aliphatic dihydroxy compound or the alicyclic dihydroxy compound may be included. For example, 2,2-bis(4-hydroxyphenyl)propane (bisphenol A) or the like may be copolymerized in a small amount.

In the case where the polycarbonate resin has a structural unit derived from a dihydroxy compound having a moiety represented by the formula (1) in a part of the structure, the content ratio of the structural unit is preferably 20% by mol or more, more preferably 30% by mol or more, further preferably 40% by mol or more, and still further preferably 50% by mol or more, and is preferably 90% by mol or less, more preferably 80% by mol or less, and further preferably 70% by mol or less.

In the case where the polycarbonate resin has a structural unit derived from a dihydroxy compound having a moiety represented by the formula (1) in a part of the structure, the polycarbonate resin can be produced by any of the phosgene method and the ester exchange method reacting with a carbonate diester, in which the ester exchange method in which the dihydroxy compound having a moiety represented by the formula (1) in a part of the structure and the other dihydroxy compound with a carbonate diester in the presence of a polymerization catalyst is preferred.

Examples of the carbonate diester include the compounds described above, in which diphenyl carbonate is preferably used.

In the case where the polycarbonate resin has a structural unit derived from a dihydroxy compound having a moiety represented by the formula (1) in a part of the structure, the molecular weight thereof can be expressed by the reduced viscosity, and the reduced viscosity is, for example, 0.3 dL/g or more, and preferably 0.35 dL/g or more, from the standpoint of imparting the mechanical strength, and is, for example, 1.2 dL/g or less, preferably 1 dL/g or less, and more preferably 0.8 dL/g or less, from the standpoint of enhancing the fluidity in molding, resulting in the enhancement of the productivity and the moldability.

The reduced viscosity can be measured in such a manner that a polycarbonate resin solution is prepared with dichloromethane as a solvent to make precisely a polycarbonate resin concentration of 0.6 g/dL, and the reduced viscosity is measured with an Ubbelohde viscometer at a temperature of 20.0°C±0.1°C.

In each of the color developing layers in which the polycarbonate resin is used, one kind of the polycarbonate resin selected from the above may be used alone, or two or more kinds thereof may be used in combination. In the case where the polycarbonate resin is used in two or more color developing layers, the polycarbonate resins used in the color developing layers may be the same as or different from each other.

The glass transition temperature of the polycarbonate resin is, for example, 70°C or more, preferably 80°C or more, more preferably 90°C or more, and further preferably 100°C or more, and is, for example, 200°C or less, preferably 180°C or less, more preferably 170°C or less, and further preferably 165°C or less. It is generally preferred that the polycarbonate resin has a single glass transition temperature. In the case where the glass transition temperature is the upper limit value or less, the color developing layers and the laminate can be formed at a relatively low temperature without color development of the coloring agent. In the case where the glass transition temperature is the lower limit value or more, the heat resistance can be secured, and the laminate can be favorably used in a passport and a card.

The polycarbonate resin preferably has a relatively low glass transition temperature from the standpoint of providing the good color developability through irradiation of laser light, facilitating the processing at a low temperature, and increasing the options of additives, which is preferably 70°C or more and 150°C or less, more preferably 80°C or more and 130°C or less, further preferably 90°C or more and 120°C or less, and still further preferably 95°C or more and 110°C or less.

The glass transition temperature may be relatively high from the standpoint of the storage stability of color and for the purpose requiring high heat resistance and mechanical strength, and in this case, the glass transition temperature of the polycarbonate resin is preferably 100°C or more and 200°C or less, more preferably 120°C or more and 180°C or less, and further preferably 145°C or more and 170°C or less.

The glass transition temperature of the polycarbonate resin in the color developing layer as used is preferably lower than one or both of the crystalline melting temperature of the coloring agent contained in the color developing layer and the crystalline melting temperature of the developer contained in the color developing layer, and more preferably lower than both of the crystalline melting temperature of the coloring agent and the crystalline melting temperature of the developer by 5°C or more. In the case where the glass transition temperature is lower than the crystalline melting temperatures of the coloring agent and the developer, it is possible that the resin composition is kneaded, the color developing layer is formed, and the color developing layer is laminated to another color developing layer or an intermediate layer, in the state where the coloring agent or the developer is not melted, and thereby the color development in the production of the laminate can be easily prevented.

The glass transition temperature can be regulated by appropriately selecting the ratio of the structural units constituting the polycarbonate resin. The glass transition temperature of the polycarbonate resin can be obtained through temperature variance measurement of the dynamic viscoelasticity with a viscoelastic spectrometer. For example, it is possible that the temperature variance measurement of the dynamic viscoelasticity is performed with a viscoelastic spectrometer "DVA-200" (available from IT Measurement Control Co., Ltd.) at a strain of 0.07%, a frequency of 1 Hz, and a temperature rise rate of 3°C/min, with reference to JIS K7244-4:1999, and the temperature shown by the peak of the primary dispersion of the loss tangent (tanδ) is designated as the glass transition temperature.

The polycarbonate resin used may be a commercially available product, and the specific examples thereof used for the bisphenol based polycarbonate resin include "Iupilon" series and "Novarex" series, available from Mitsubishi Engineering-Plastics Corporation, and "Calibre" series, available from Sumika Polycarbonate Ltd. Examples of the polycarbonate resin having a structural unit derived from the dihydroxy compound having a moiety represented by the formula (1) used include "Durabio" series, available from Mitsubishi Chemical Corporation.

### (Polyester Resin)

The polyester resin may be either a homopolyester or a copolymer polyester. The homopolyester is preferably an aromatic polyester obtained through polycondensation of an aromatic dicarboxylic acid and an aliphatic glycol. Examples of the aromatic dicarboxylic acid include terephthalic acid and 2,6-naphthalenedicarboxylic acid, and examples of the aliphatic glycol include ethylene glycol, diethylene glycol, butanediol, and 1,4-cyclohexanedimethanol. Representative examples of the aromatic dicarboxylic acid include terephthalic acid, representative examples of the aliphatic glycol include ethylene glycol and butanediol, and representative examples of the homopolyester include polyethylene terephthalate (PET) and polybutylene terephthalate (PBT).

Examples of the dicarboxylic acid component of the copolymer polyester include one kind or two or more kinds of isophthalic acid, phthalic acid, terephthalic acid, 2,6-naphthalenedicarboxylic acid, adipic acid, sebacic acid, and an oxycarboxylic acid, and examples of the glycol component thereof include one kind or two or more kinds of ethylene glycol, diethylene glycol, propylene glycol, butanediol, 1,4-cyclohexanedimethanol (1,4-CHDM), and neopentyl glycol.

The polyester may be either a crystalline polyester or an amorphous polyester, and an amorphous polyester is preferred. The use of an amorphous polyester is preferred since it facilitates the improvement of the adhesiveness to the other color developing layer and the intermediate layer described later, and also facilitates the improvement of the transparency. Furthermore, in the case where the laminate is used in a card or a passport, the adhesiveness to the other members constituting the card or the passport, such as a core sheet and a protective layer described later, is also improved.

It suffices that the amorphous polyester is a substantially amorphous polyester, and the substantially amorphous polyester (including a low crystalline polyester) used may be a polyester that does not show a clear crystal melting peak in heating with a differential scanning calorimeter (DSC), a polyester that has crystallinity, but has a low crystallization rate and does not become a highly crystalline state in molding, such as an extrusion film forming method, or a polyester that has crystallinity, but has a low value of 10 J/g or less for the crystal melting heat (ΔHm) measured in heating with a differential scanning calorimeter (DSC). Accordingly, the amorphous polyester in the present invention also encompasses a "crystalline polyester that is in an amorphous state".

The amorphous polyester is preferably a copolymer polyester constituted by terephthalic acid as a major component of the dicarboxylic acid component, and 20% by mol or more and 80% by mol or less of 1,4-CHDM and 20% by mol or more and 80% by mol or less of ethylene glycol as a major component of the glycol component, from the standpoint of facilitating the simultaneous achievement of the practically sufficient heat resistance and the low temperature workability, and the availability of the raw materials. The copolymer polyester of this kind has been known as a PETG resin (glycol-modified polyethylene terephthalate).

The "major component" in the dicarboxylic acid component herein means that the amount of terephthalic acid contained is 70% by mol or more, preferably 80% by mol or more, and more preferably 98% by mol or more, based on the total dicarboxylic acid component (100% by mol). The "major component" in the diol component herein means that the total amount of 1,4-CHDM and ethylene glycol is preferably 70% by mol or more, more preferably 80% by mol or more, and further preferably 90% by mol or more, based on the total amount of the diol component (100% by mol).

In the case where the amount of 1,4-CHDM in the diol component is the lower limit value or more, the characteristics as a crystalline resin are suppressed, facilitating the suppression of the deterioration in transparency due to the crystallization, and facilitating the improvement of the adhesion to other layers. In the case where the amount of 1,4-CHDM in the diol component is the upper limit value or less, similarly, the characteristics as a crystalline resin are suppressed, facilitating the suppression of the deterioration in transparency due to the crystallization, and facilitating the improvement of the adhesion to other layers.

In the copolymer polyester within the composition range above, it has been known that a composition containing 1,4-CHDM in an amount of around 30% by mol of the diol component shows no crystallization behavior in a DSC (differential scanning calorimeter) measurement, and shows a complete amorphous nature. Examples of a complete amorphous polyester as a PETG resin include "Eastar GN001", available from Eastman Chemical Company.

However, the polyester is not limited thereto, and a polyester having low crystallinity substantially can also be used as the amorphous polyester, examples of which include a copolymer polyester having a structure inhibiting crystallization through introduction of various copolymer components, such as a PET based resin copolymerized with diethylene glycol, and a PET based or PBT based resin copolymerized with isophthalic acid that has low crystallinity. Furthermore, an amorphous polyester resin obtained by replacing a part or the whole of terephthalic acid in the polyester resins shown above with naphthalenedicarboxylic acid can also be similarly used.

In each of the color developing layers in which the polyester resin is used, one kind of the polyester resin selected from the above may be used alone, or two or more kinds thereof may be used in combination. In the case where the polyester resin is used in two or more color developing layers, the polyester resins used in the color developing layers each may be the same as or different from each other.

### (Polyolefin Resin)

Examples of the polyolefin resin used in the color developing layer include a polymer of various linear olefins, such as ethylene, propylene, isobutylene, butene, poly(4-methylpentene), and isoprene, and a copolymer thereof. Among these, a polyethylene resin and a polypropylene resin are preferred, and among these, a polyethylene resin is more preferred.

The polyethylene resin is not particularly limited, may be any of a high density polyethylene (HDPE, density: 0.942 g/cm³ or more), a medium density polyethylene (MDPE, density 0.930 g/cm³ or more and less than 0.942 g/cm³), and a low density polyethylene (LDPE, density less than 0.930 g/cm³), and may also be a linear low density polyethylene (LLDPE), and linear low density polyethylene is preferred. Accordingly, in the case where a polyolefin resin is used in two or more color developing layers, it is preferred to use the polyolefin resin in all the color developing layers, and it is more preferred to use a linear low density polyethylene in all the color developing layers.

The polypropylene resin may be a homopolypropylene, or a random copolymer (random polypropylene) or a block copolymer (block polypropylene) of propylene with an α-olefin, such as ethylene, 1-butene, 1-pentene, 1-hexene, 1-heptene, 1-octene, 1-none, or 1-decene.

**In** each of the color developing layers in which the polyolefin resin is used, one kind of the polyolefin resin selected from the above may be used alone, or two or more kinds thereof may be used in combination. **In** the case where the polyolefin resin is used in two or more color developing layers, the polyolefin resins used in the color developing layers each may be the same as or different from each other.

### (Acrylic Resin)

The acrylic resin used may be an acrylic polymer obtained through polymerization or copolymerization of various (meth)acrylate(s). It is preferred that the acrylic copolymer is obtained through polymerization of a monomer containing an alkyl (meth)acrylate as a major component (for example, 50% by mol or more, and preferably 70 to 100% by mol, based on the total monomer).

Examples of the monomer include an alkyl (meth)acrylate, such as methyl methacrylate, n-butyl (meth)acrylate, isobutyl (meth)acrylate, tert-butyl (meth)acrylate, 2-ethylhexyl (meth)acrylate, lauryl (meth)acrylate, tridecyl (meth)acrylate, and stearyl (meth)acrylate, methacrylic acid, acrylic acid, benzyl (meth)acrylate, glycidyl (meth)acrylate, 2-hydroxyethyl (meth)acrylate, hydroxypropyl (meth)acrylate, 2-methoxyethyl (meth)acrylate, 2-ethoxyethyl (meth)acrylate, cyclohexyl (meth)acrylate, isobornyl (meth)acrylate, norbornyl (meth)acrylate, dicyclopentenyl (meth)acrylate, dicyclopentanyl (meth)acrylate, dicyclopentenyloxyethyl (meth)acrylate, tetrahydrofurfuryl (meth)acrylate, acryl (meth)acrylate, 2-(meth)acroyloxyethyl succinate, 2-(meth)acroyloxyethyl maleate, 2-(meth)acroyloxyethyl phthalate, 2-(meth)acryloyloxyethyl hexahydrophthalate, pentamethylpiperidyl (meth)acrylate, tetramethylpiperidyl (meth)acrylate, dimethylaminoethyl (meth)acrylate, and diethylaminoethyl (meth)acrylate. These compounds may be used alone, or two or more kinds thereof may be used in combination. Among these, for example, an alkyl (meth)acrylate having an alkyl group having approximately 1 to 18 carbon atoms is preferably used. An additional monomer that can be polymerized with the acrylic based monomer, such as a polyolefin based monomer and a vinyl based monomer, may be used in combination. The acrylic resin may also be a polysodium acrylate resin or a polyacrylonitrile resin.

The glass transition temperature (Tg) of the acrylic resin is not particularly limited, and is preferably 120°C or less, more preferably 115°C or less, further preferably 110°C or less, and still further preferably 105°C or less, and is preferably 50°C or more, more preferably 60°C or more, further preferably 70°C or more, still further preferably 80°C or more, and still more further preferably 90°C or more, from the standpoint of the balance between the heat resistance and the color development capability, in which color development with a sufficient density can be obtained within a short printing time. The glass transition temperature of the acrylic resin can be obtained in such a manner that the acrylic resin is heated with a differential scanning calorimeter (DSC) under a nitrogen atmosphere at a temperature rise rate of 10°C/min, and the peak top temperature of the melting peak of the DSC curve detected in reheating is measured.

The hydroxy value of the acrylic resin is not particularly limited, and is preferably 230 mgKOH/g or less, more preferably 200 mgKOH/g or less, further preferably 150 mgKOH/g or less, still further preferably 100 mgKOH/g or less, and still more further preferably 50 mgKOH/g or less, from the standpoint of the film forming stability of the laminate and the balance between the thermal stability and the color developability of the resulting laminate. The hydroxy value can be calculated in such a manner that hydroxy groups in 1 g of the solid content of the vinyl based polymer solution are acetylated with acetic anhydride, and the amount in terms of mg of potassium hydroxide required for neutralizing acetic acid formed through the acetylation is measured by titration.

The intrinsic viscosity of the acrylic resin is not particularly limited, is preferably 0.3 L/g or less, and more preferably 0.15 L/g or less, and is preferably 0.05 L/g or more, and more preferably 0.06 L/g or more, from the standpoint of decreasing foreign matters in the laminate to improve the appearance thereof, and suppressing the unevenness in thickness of the laminate. The intrinsic viscosity can be measured, for example, with AVL-2C Automatic Viscometer, available from SUN Electronic Industries Corporation, using chloroform as a solvent at 25°C.

For regulating the intrinsic viscosity of the acrylic resin, for example, a polymerization modifier, such as a mercaptan, may be used. Examples of the mercaptan include n-octyl mercaptan, n-dodecyl mercaptan, and tert-dodecyl mercaptan. The content of the mercaptan is preferably 0.01 part by mass or more and is preferably 1 part by mass or less per 100 parts by mass of the acrylic resin from the standpoint of improving the dispersibility.

The ratio Mw/Mn of the mass average molecular weight (Mw) and the number average molecular weight (Mn) of the acrylic resin is preferably 2.3 or less, and more preferably 2.2 or less. With a smaller value of Mw/Mn, the molecular weight distribution of the acrylic resin is closer to monodispersity, in which the high molecular weight components are decreased, suppressing the occurrence of appearance failure due to foreign matters in the laminate. The ratio Mw/Mn means a value that is obtained through measurement by gel permeation chromatography (GPC) under the following condition.

### <GPC Measurement Condition>

Apparatus used: "HLC-8320GPC System", available from TOSOH CORPORATION
Columns: "TGKgel SupaerHZM-H" × 2, available from TOSOH CORPORATION
Eluent: tetrahydrofuran
Column temperature: 40°C
Detector: differential refractive index (RI)

The mass average molecular weight (Mw) of the acrylic resin is preferably 30,000 or more, and more preferably 50,000 or more, and is preferably 300,000 or less, more preferably 250,000 or less, and further preferably 200,000 or less, from the standpoint of the mechanical characteristics and the heat resistance.

The melt flow rate of the acrylic resin is not particularly limited, is preferably 1 g/10 min or more, more preferably 3 g/10 min or more, and further preferably 5 g/10 min or more, and is preferably 20 g/10 min or less, more preferably 15 g/10 min or less, further preferably 12 g/10 min or less, and still further preferably 9 g/10 min or less, from the standpoint of decreasing foreign matters in the laminate to improve the appearance thereof, preventing the occurrence of unevenness in thickness of the laminate, facilitating the suppression of the increase in resin pressure in the production of the laminate. The melt flow rate is a value that is measured according to JIS K7210-1:2014 under condition of a temperature of 230°C and a load of 3.8 kg.

In each of the color developing layers in which the acrylic resin is used, one kind of the acrylic resin selected from the above may be used alone, or two or more kinds thereof may be used in combination. In the case where the acrylic resin is used in multiple color developing layers, the acrylic resins used in the color developing layers may be the same as or different from each other.

In the multiple color developing layers (i.e., the layer (A) and the layer (B), or the layer (A), the layer (B), and the layer (C)) the resin of the same kind or the resins of different kinds may be used, and the resin of the same kind is preferably used.

Therefore, for example, in the case where a polycarbonate resin is used as a major component in the layer (A), it is preferred that the polycarbonate resin is used as a major component in the layer (B) (or in the layer (B) and the layer (C)), and in the case where a polyester resin is used as a major component in the layer (A), it is preferred that the polyester resin is used as a major component in the layer (B) (or in the layer (B) and the layer (C)). Furthermore, for example, in the case where an acrylic resin is used as a major component in the layer (A), it is preferred that the acrylic resin is used as a major component in the layer (B) (or in the layer (B) and the layer (C)), and in the case where a polyolefin resin is used as a major component in the layer (A), it is preferred that the polyolefin resin is used as a major component in the layer (B) (or in the layer (B) and the layer (C)).

The use of the thermoplastic resin of the same kind as a major component in the color developing layers facilitates the production of the laminate. In the case where one pair of the color developing layers adjacent to each other are directly laminated as described later, the use of the resin of the same kind in the color developing layers enhances the adhesiveness between the one pair of the color developing layers. In the case where one pair of the color developing layers are laminated via an intermediate layer, the one pair of the color developing layers can be laminated via the intermediate layer with a high adhesion strength by appropriately selecting the resin of the intermediate layer.

The resin in at least one layer of the color developing layers is preferably a resin that has an absorption peak of the light transmission spectrum around the wavelength of laser light to be radiated, and in particular, the resins in the color developing layers each are more preferably a resin that has an absorption peak of the light transmission spectrum around the wavelength of laser light to be radiated. Specifically, a resin having an absorption peak in a wavelength range of (λ-120) nm or more and (λ+120) nm or less is more preferred, in which λ nm represents a wavelength of laser light to be radiated. The wavelength range is more preferably (λ-90) nm or more and (λ+90) nm or less, further preferably (λ-60) nm or more and (λ+60) nm or less, still further preferably (λ-40) nm or more and (λ+40) nm or less, and still more further preferably (λ-20) nm or more and (λ+20) nm or less. The use of the resin having an absorption peak in the wavelength range can provide color development with a sufficient density through laser irradiation, to facilitate marking of clear letters, images, and the like. Furthermore, multiple colors can be easily developed with irradiation of laser light having one prescribed wavelength, and the configuration of the apparatus for laser marking the laminate can be simplified.

For example, in the case where the wavelength of laser light to be radiated is 355 nm, a resin having an absorption peak in a wavelength range of 235 nm or more and 475 nm or less is more preferred, a resin having an absorption peak in a wavelength range of 265 nm or more and 445 nm or less is further preferred, a resin having an absorption peak in a wavelength range of 295 nm or more and 415 nm or less is still further preferred, a resin having an absorption peak in a wavelength range of 315 nm or more and 395 nm or less is still more further preferred, and a resin having an absorption peak in a wavelength range of 325 nm or more and 375 nm or less is even further preferred. Examples of the resin of this type include an acrylic resin, such as a poly(methacrylic acid ester) resin, e.g., polymethyl methacrylate, poly(acrylic acid ester) resin, a polysodium acrylate resin, and a polyacrylonitrile resin, a polycarbonate resin containing a structural unit derived from a dihydroxy compound having a moiety represented by the formula (1) in a part of the structure, and polyimide resin. Among these, a polycarbonate resin containing a structural unit derived from a dihydroxy compound having a moiety represented by the formula (1) in a part of the structure is preferred from the standpoint of the transparency, the heat resistance, the impact resistance, the chemical resistance, the plant origin, and the like.

As described later, the wavelength of laser light to be radiated to the laminate for laser marking is preferably 200 nm or more and 1,500 nm or less, more preferably 250 nm or more and 1,200 nm or less, further preferably 300 nm or more and 900 nm or less, still further preferably in the visible light region or the ultraviolet ray region, i.e., less than 780 nm, still more further preferably 300 nm or more and 600 nm or less, even further preferably 320 nm or more and 500 nm or less, and even still further preferably 340 nm or more and 400 nm or less. From the standpoint of the wavelength of laser light to be radiated, the thermoplastic resin used in the color developing layer is preferably a resin having an absorption peak in a wavelength range of 250 nm or more and 1,200 nm or less, further preferably 280 nm or more and 900 nm or less, still further preferably in the visible light region or the ultraviolet ray region, i.e., less than 780 nm, still more further preferably 300 nm or more and 600 nm or less, even further preferably 320 nm or more and 500 nm or less, even still further preferably 330 nm or more and 400 nm or less, and even still more further preferably 340 nm or more and 370 nm or less. Examples of the resin of this type include an acrylic resin, such as a poly(methacrylic acid ester) resin, e.g., polymethyl methacrylate, poly(acrylic acid ester) resin, a polysodium acrylate resin, and a polyacrylonitrile resin, a polycarbonate resin containing a structural unit derived from a dihydroxy compound having a moiety represented by the formula (1) in a part of the structure, and polyimide resin. Among these, a polycarbonate resin containing a structural unit derived from a dihydroxy compound having a moiety represented by the formula (1) in a part of the structure is preferred from the standpoint of the transparency, the heat resistance, the impact resistance, the chemical resistance, the plant origin, and the like.

**In** each of the color developing layers, the transmittance of the resin at the wavelength of laser light to be radiated is not particularly limited, and is preferably 85% or less, more preferably 80% or less, further preferably 76% or less, and still further preferably 73% or less. **In** the case where the transmittance of the resin at the wavelength of laser light to be radiated is lower, the color developing layers can easily develop color through generation of energy or heat by absorbing the radiated laser light, to facilitate marking of clear letters, images, and the like. The transmittance of the resin at the wavelength of laser light to be radiated is, for example, 30% or more, preferably 40% or more, and more preferably 50% or more, while not particularly limited.

### <Coloring Agent and Developer>

The at least two layers of the laminate each preferably contain a resin and a coloring agent as described above. The coloring agent preferably develops color through irradiation of laser light. The coloring agent preferably develops color with a developer described later.

In each of the color developing layers, the content of the coloring agent is preferably less than 10 parts by mass per 100 parts by mass of the resin. In the case where the content thereof is less than 10 parts by mass, color development corresponding to the content thereof can be obtained. Furthermore, erroneous color development of the color developing layer in the formation of the color developing layer or the formation of the laminate, and deterioration of the mechanical strength of the color developing layer can be suppressed. Consequently, the laminate can be favorably used in a passport and a card.

From this standpoint, the content of the coloring agent is more preferably 8 parts by mass or less, further preferably 6 parts by mass or less, still further preferably 4 parts by mass or less, and most preferably 2 parts by mass or less.

In each of the color developing layers, the content of the coloring agent is preferably 0.05 part by mass or more per 100 parts by mass of the resin. In the case where the content thereof is 0.05 part by mass or more, the coloring agent can be allowed to develop color properly by heating through laser irradiation or the like. From the standpoint of enhancing the color developability, the content of the coloring agent is more preferably 0.1 part by mass or more, further preferably 0.3 part by mass or more, still further preferably 0.5 part by mass or more, still more further preferably 0.7 part by mass or more, and most preferably 0.9 part by mass or more.

It is preferred that at least one of the multiple color developing layers in the laminate contains a developer in addition to the coloring agent, and it is more preferred that the multiple color developing layer each contain a developer in addition to the coloring agent. With the developer contained in the color developing layer, the color developing layer is heated through laser irradiation or the like, thereby heating the coloring agent, the developer, and the like in each of the color developing layers, and thus in each of the heated color developing layers, the coloring agent is allowed to develop color with the developer.

In the color developing layer containing the developer, the content of the developer is preferably 30 parts by mass or less per 100 parts by mass of the resin. In the case where the content of the developer is 30 parts by mass or less, the color developing layer can develop color corresponding to the content thereof. Furthermore, erroneous color development of the color developing layer in the formation of the color developing layer or the formation of the laminate, and deterioration of the mechanical strength of the color developing layer can be suppressed. Consequently, the laminate can be favorably used in a passport and a card. From this standpoint, the content of the developer in the color developing layer is more preferably 25 parts by mass or less, further preferably 19 parts by mass or less, still further preferably 15 parts by mass or less, still more further preferably 10 parts by mass or less, particularly preferably 6 parts by mass or less, still particularly preferably 4 parts by mass or less, and most preferably 2 parts by mass or less.

In each of the color developing layers, the content of the developer is preferably 0.05 part by mass or more per 100 parts by mass of the resin. In the case where the content thereof is 0.05 part by mass or more, the developer can properly allow the coloring agent in each of the color developing layers to develop color in marking through laser irradiation or the like. The content of the developer is more preferably 0.1 part by mass or more, further preferably 0.3 part by mass or more, particularly preferably 0.5 part by mass or more, still particularly preferably 0.7 part by mass or more, and most preferably 0.9 part by mass or more.

The ratio in mass basis of the content of the coloring agent with respect to the content of the developer in each of the color developing layers containing the coloring agent and the developer is preferably 0.05 or more and 20 or less, more preferably 0.1 or more and 10 or less, further preferably 0.2 or more and 5 or less, still further preferably 0.33 or more and 3 or less, and still more further preferably 0.4 or more and 2.5 or less. In the case where the content ratio is in the range, the capability of the resin is less likely to be impaired, facilitating the proper color development of the color developing layers with high color developability in marking through laser irradiation or the like.

### [Coloring Agent]

The coloring agent and the developer used in the present invention are described in detail below. The coloring agent used in the present invention is not particularly limited, as long as being a colorant, and preferred examples thereof include a leuco colorant. A leuco colorant is generally basic, and known materials in the field of pressure sensitive or heat sensitive recording paper can be used. It suffices that the leuco colorant is colorless or has pale color before color development. The leuco colorant is preferably a leuco dye.

The thermal decomposition temperature of the coloring agent is preferably 200°C or more. In the case where the thermal decomposition temperature of the coloring agent is 200°C or more, the coloring agent can properly develop color in the laminate without thermal decomposition of the coloring agent in forming the color developing layer or the like. From the above standpoint, the thermal decomposition temperature of the coloring agent is more preferably 220°C or more, further preferably 240°C or more, still further preferably 260°C or more, still more further preferably 280°C or more, and particularly preferably 300°C or more.

The upper limit value of the thermal decomposition temperature of the coloring agent is not particularly limited, and may be such a value that the weight thereof is not decreased by 5% in heating to 350°C according to the measurement method described later, i.e., may exceeds 350°C.

The thermal decomposition temperature of the coloring agent and the developer described later can be obtained in such a manner that the temperature where the weight thereof is decreased by 5% in the thermogravimetric analysis (TGA) while heating at a temperature rise rate of 10°C/min is designated as the thermal decomposition temperature. The decomposition temperature is measured by heating to 350°C, and the decomposition temperature in the case where the weight is not decreased by 5% at 350°C is designated as "more than 350°C".

The crystalline melting temperature of the coloring agent is preferably 100°C or more. In the case where the crystalline melting temperature of the coloring agent is 100°C or more, the coloring agent can be prevented from bleeding to the surface in the case where the color developing layer is formed, and in the case where the laminate is used in a card or a passport under a high temperature environment. From the above standpoint, the crystalline melting temperature of the coloring agent is more preferably 120°C or more, further preferably 140°C or more, still further preferably 150°C or more, and particularly preferably 160°C or more.

The crystalline melting temperature of the coloring agent is preferably 300°C or less. In the case where the crystalline melting temperature thereof is 300°C or less, the dispersibility of the coloring agent in forming the color developing layer is improved, preventing the color development unevenness and the deterioration in mechanical strength from occurring. From the above standpoint, the crystalline melting temperature of the coloring agent is more preferably 260°C or less, further preferably 240°C or less, still further preferably 220°C or less, and particularly preferably 200°C or less.

The crystalline melting temperature of the coloring agent and the developer described later can be obtained in such a manner that the material is heated with a differential scanning calorimeter (DSC) under a nitrogen atmosphere at a temperature rise rate of 10°C/min, and the peak top temperature of the melting peak of the detected DSC curve is measured.

In the color developing layer, while not limiting, it is preferred that the coloring agent is not sealed in another material, such as capsules, but for example, the compound itself constituting the coloring agent described later is dispersed or dissolved in the resin constituting the color developing layer.

Examples of the leuco colorant that is preferably used as the coloring agent include a compound that has a capability of developing color by heating with being bonded to the developer. Examples of the leuco colorant particularly include a colorless or pale color compound that has a partial skeleton, such as a lactone, a lactam, a sultone, a spiropyran, an ester, or an amide, in which the partial skeleton rapidly undergoes ring-opening or cleavage in heating while being in contact with the developer.

Specific examples of the leuco colorant include a triphenylmethane based leuco dye, a fluoran based leuco dye, a fluorene based leuco dye, a divinyl based leuco dye, and a pyridine based leuco dye. Specific examples of the representative colorless or pale color dyes (i.e., dye precursors) are shown below, while not limiting.

Examples of the triphenylmethane based leuco dye include 3,3-bis(4-dimethylaminophenyl)-6-dimethylaminophthalide (referred to as "crystal violet lactone"), 3,3-bis(4-dimethylaminophenyl)phthalide (referred to as "malachite green lactone"), and 3-(4-dimethylaminophenyl)-3-(4-diethylamino-2-methylphenyl)-6-dimethylaminophthalide.

Examples of the fluoran based leuco dye include 2-methyl-6-(N-p-tolyl-N-ethylamino)fluoran, 3-N-ethyl-N-isopentylamino-7,8-benzofluoran, 3-diethylamino-6-methylfluoran, 3-diethylamino-6-methyl-7-anilinofluoran, 3-diethylamino-6-methyl-7-(o,p-dimethylanilino)fluoran, 3-diethylamino-6-methyl-7-chlorofluoran, 3-diethylamino-6-methyl-7-(m-trifluoromethylanilino)fluoran, 3-diethylamino-6-methyl-7-(o-chloroanilino)fluoran, 3-diethylamino-6-methyl-7-(p-chloroanilino)fluoran, 3-diethylamino-6-methyl-7-(o-fluoroanilino)fluoran, 3-diethylamino-6-methyl-7-(m-methylanilino)fluoran, 3-diethylamino-6-methyl-7-octylanilinofluoran, 3-diethylamino-6-methyl-7-octylaminofluoran, 3-diethylamino-6-methyl-7-benzylaminofluoran, 3-diethylamino-6-methyl-7-dibenzylaminofluoran, 3-diethylamino-6-chloro-7-methylfluoran, 3-diethylamino-6-chloro-7-anilinofluoran, 3-diethylamino-6-chloro-7-p-methylanilinofluoran, 3-diethylamino-6-ethoxyethyl-7-anilinofluoran, 3-diethylamino-7-methylfluoran, 3-diethylamino-7-chlorofluoran, 3-diethylamino-7-(m-trifluoromethylanilino)fluoran, 3-diethylamino-7-(o-chloroanilino)fluoran, 3-diethylamino-7-(p-chloroanilino)fluoran, 3-diethylamino-7-(o-fluoroanilino)fluoran, 3-diethylaminobenzo[a]fluoran, 3-diethylaminobenzo[c]fluoran, 3-dibutylamino-6-methylfluoran, 3-dibutylamino-6-methyl-7-anilinofluoran, 3-dibutylamino-6-methyl-7-(o,p-dimethylanilino)fluoran, 3-dibutylamino-6-methyl-7-(o-chloroanilino)fluoran, 3-dibutylamino-6-methyl-7-(p-chloroanilino)fluoran, 3-dibutylamino-6-methyl-7-(o-fluoroanilino)fluoran, 3-dibutylamino-6-methyl-7-(m-trifluoromethylanilino)fluoran, 3-dibutylamino-6-methylchlorofluoran, 3-dibutylamino-6-ethoxyethyl-7-anilinofluoran, 3-dibutylamino-6-chloro-7-anilinofluoran, 3-dibutylamino-6-methyl-7-p-methylanilinofluoran, 3-dibutylamino-7-(o-chloroanilino)fluoran, 3-dibutylamino-7-(o-fluoroanilino)fluoran, 3-dipentylamino-6-methyl-7-anilinofluoran, 3-dipentylamino-6-methyl-7-(p-chloroanilino)fluoran, 3-dipentylamino-7-(m-trifluoromethylanilino)fluoran, 3-dipentylamino-6-chloro-7-anilinofluoran, 3-dipentylamino-7-(p-chloroanilino)fluoran, 3-pyrrolidino-6-methyl-7-anilinofluoran, 3-piperidino-6-methyl-7-anilinofluoran, 3-(N-methyl-N-propylamino)-6-methyl-7-anilinofluoran, 3-(N-methyl-N-cyclohexylamino)-6-methyl-7-anilinofluoran, 3-(N-ethyl-N-cyclohexylamino)-6-methyl-7-anilinofluoran, 3-(N-ethyl-N-xylamino)-6-methyl-7-(p-chloroanilino)fluoran, 3-(N-ethyl-p-toluidino)-6-methyl-7-anilinofluoran, 3-(N-ethyl-N-isoamylamino)-6-methyl-7-anilinofluoran, 3-(N-ethyl-N-isoamylamino)-6-chloro-7-anilinofluoran, 3-(N-ethyl-N-tetrahydrofurfurylamino)-6-methyl-7-anilinofluoran, 3-(N-ethyl-N-isobutylamino)-6-methyl-7-anilinofluoran, 3-(N-ethyl-N-ethoxypropylamino)-6-methyl-7-anilinofluoran, 3-cyclohexylamino-6-chlorofluoran, 2-(4-oxahexyl)-3-dimethylamino-6-methyl-7-anilinofluoran, 2-(4-oxahexyl)-3-diethylamino-6-methyl-7-anilinofluoran, 2-(4-oxahexyl)-3-dipropylamino-6-methyl-7-anilinofluoran, 2-methyl-6-p-(p-dimethylaminophenyl)aminoanilinofluoran, 2-methoxy-6-p-(p-dimethylaminophenyl)aminoanilinofluoran, 2-chloro-3-methyl-6-p-(p-phenylaminophenyl)aminoanilinofluoran, 2-chloro-6-p-(p-dimethylaminophenyl)aminoanilinofluoran, 2-nitro-6-p-(p-diethylaminophenyl)aminoanilinofluoran, 2-amino-6-p-(p-diethylaminophenyl)aminoanilinofluoran, 2-diethylamino-6-p-(p-diethylaminophenyl)aminoanilinofluoran, 2-phenyl-6-methyl-6-p-(p-phenylaminophenyl)aminoanilinofluoran, 2-benzyl-6-p-(p-phenylaminophenyl)aminoanilinofluoran, 2-hydroxy-6-p-(p-phenylaminophenyl)aminoanilinofluoran, 3-methyl-6-p-(p-dimethylaminophenyl)aminoanilinofluoran, 3-diethylamino-6-p-(p-diethylaminophenyl)aminoanilinofluoran, 3-diethylamino-6-p-(p-dibutylaminophenyl)aminoanilinofluoran, 2,4-dimethyl-6-[(4-dimethylamino)anilino]fluoran, 3,6-dimethoxyfluoran, 3-dimethylamino-7-methoxyfluoran, 3-diethylamino-6-methoxyfluoran, 3-diethylamino-7-methoxyfluoran, 3-diethylamino-6,7-dimethylfluoran, 3-N-cyclohexyl-N-n-butylamino-7-methylfluoran, 3-diethylamino-7-dibenzylaminofluoran, 3-diethylamino-7-octylaminofluoran, 3-diethylamino-7-di-n-hexylaminofluoran, 3-diethylamino-7-anilinofluoran, 3,6-bis(diethylamino)fluoran-γ-(3'-nitro)anilinolactam, and 3,6-bis(diethylamino)fluoran-γ-(4'-nitro)anilinolactam.

Examples of the fluorene based leuco dye include 3,6,6'-tris(dimethylamino)spiro[fluorene-9,3'-phthalide] and 3,6,6'-tris(diethylamino)spiro[fluorene-9,3'-phthalide].

Examples of the divinyl based leuco dye include 3,3-bis[2-(p-dimethylaminophenyl)-2-(p-methoxyphenyl)ethenyl]-4,5,6,7-tetrabromophthalide, 3,3-bis[2-(p-dimethylaminophenyl)-2-(p-methoxyphenyl)ethenyl]-4,5,6,7-tetrachlorophthalide, 3,3-bis[1,1-bis(4-pyrrolidinophenyl)ethylene-2-yl]-4,5,6,7-tetrabromophthalide, and 3,3-bis[1-(4-methoxyphenyl)-1-(4-pyrrolidinophenyl)ethylene-2-yl]-4,5,6,7-tetrachlorophthalide.

Examples of the pyridine based leuco dye include a leuco dye containing a pyridine skeleton, specifically, 4-[2,6-bis(2,4-diethoxyphenyl)-4-pyridyl]-N,N-dimethylaniline.

Examples of the leuco dye also include an azaphthalide based leuco dye, such as 3-(4-diethylamino-2-ethoxyphenyl)-3-(1-ethyl-2-methylindol-3-yl)-4-azaphthalide, 3-(4-diethylamino-2-ethoxyphenyl)-3-(1-octyl-2-methylindol-3-yl)-4-azaphthalide, 3-(4-cyclohexylethylamino-2-methoxyphenyl)-3-(1-ethyl-2-methylindol-3-yl)-4-azaphthalide, 3-(2-methyl-4-diethylaminophenyl)-3-(1-ethyl-2-methylindol-3-yl)-4-azaphthalide, 3-(2-n-propoxylcarbonylamino-4-di-n-propylaminophenyl)-3-(1-ethyl-2-methylindol-3-yl)-4-azaphthalide, 3-(2-methylamino-4-di-n-propylaminophenyl)-3-(1-ethyl-2-methylindol-3-yl)-4-azaphthalide, 3-(2-methyl-4-di-n-hexylaminophenyl)-3-(1-n-octyl-2-methylindol-3-yl)-4,7-diazaphthalide, 3,3-bis(2-ethoxy-4-diethylaminophenyl)-4-azaphthalide, 3,3-bis(1-n-octyl-2-methylindol-3-yl)-4-azaphthalide, 3-(2-ethoxy-4-diethylaminophenyl)-3-(1-ethyl-2-methylindol-3-yl)-4-azaphthalide, 3-(2-ethoxy-4-diethylaminophenyl)-3-(1-octyl-2-methylindol-3-yl)-4 or 7-azaphthalide, 3-(2-ethoxy-4-diethylaminophenyl)-3-(1-ethyl-2-methylindol-3-yl)-4 or 7-azaphthalide, 3-(2-hexyloxy-4-diethylaminophenyl)-3-(1-ethyl-2-methylindol-3-yl)-4 or 7-azaphthalide, 3-(2-ethoxy-4-diethylaminophenyl)-3-(1-ethyl-2-phenylindol-3-yl)-4 or 7-azaphthalide, 3-(2-butoxy-4-diethylaminophenyl)-3-(1-ethyl-2-phenylindol-3-yl)-4 or 7-azaphthalide, 3-methyl-spiro-dinaphthopyran.

Examples thereof also include an indole ring-containing phthalide based leuco dye, such as 3-(4-dimethylaminophenyl)-3-(1,2-dimethylindol-3-yl)phthalide, 3-(4-dimethylaminophenyl)-3-(2-methylindol-3-yl)phthalide, 3,3-bis(1,2-dimethylindol-3-yl)-5-dimethylaminophthalide, 3,3-bis(1,2-dimethylindol-3-yl)-6-dimethylaminophthalide, 3,3-bis(2-phenylindol-3-yl)-6-dimethylaminophthalide, 3-[1,1-di(1-ethyl-2-methylindol-3-yl)ethylene-2-yl]-3-(4-diethylaminophenyl)phthalide, 3-[1,1-di(1-ethyl-2-methylindol-3-yl)ethylene-2-yl]-3-(4-N-ethyl-N-phenylaminophenyl)phthalide, 3-(2-ethoxy-4-diethylaminophenyl)-3-(1-n-octyl-2-methylindol-3-yl)phthalide, 3,3-bis(1-n-octyl-2-methylindol-3-yl)phthalide, 3,3-bis(1-butyl-2-methylindol-3-yl)phthalide (3,3-bis(1-n-butyl-2-methyl-3-indolyl)phthalide), and 3-(2-methyl-4-diethylaminophenyl)-3-(1-n-octyl-2-methylindol-3-yl)phthalide. Examples thereof also include 3,3-bis(9-ethylcarbazol-3-yl)-6-dimethylaminophthalide, and 3-(4-dimethylaminophenyl)-3-(1-methylpyrrol-3-yl)-6-dimethylaminophthalide.

Examples thereof also include 3-ethyl-spirodinaphthopyran, 3-phenyl-spirodinaphthopyran, 3-benzyl-spirodinaphthopyran, 3-methyl-naphtho-(3-methoxybenzo)spiropyran, 2'-anilino-6'-(N-ethyl-N-isopentyl)amino-3'-methylspiro[isobenzofuran-1(3H),9'-(9H)xanthen]-3-one, 2'-anilino-6'-(N-ethyl-N-(4-methylphenyl))amino-3'-methylspiro[isobenzofuran-1(3H),9'-(9H)xanthen]-3-one, 3'-N,N-dibenzylamino-6'-N,N-diethylaminospiro[isobenzofuran-1(3H),9'-(9H)xanthen]-3-one, and 2'-(N-methyl-N-phenyl)amino-6'-(N-ethyl-N-(4-methylphenyl))aminospiro[isobenzofuran-1(3H),9'-(9H)xanthen]-3-one.

Among the above, the coloring agent is preferably a triphenylmethane based leuco dye, a pyridine based leuco dye, an indole ring-containing phthalide based leuco dye, a fluoran based leuco dye, and a fluorene based leuco dye. These coloring agents have advantages that color is developed with less energy, and only the target color developing layer can be selectively allowed to develop color without developing color by the other layers. Furthermore, there are advantages that the coloring agent are not easily diffused with heat in laser irradiation due to the high crystalline melting temperature thereof, and only the target part can be allowed to develop color without blur over the periphery that is not irradiated with laser light.

In particular, an indole ring-containing phthalide based leuco dye, such as 3,3-bis(1-n-butyl-2-methyl-3-indolyl)phthalide, and a triphenylmethane based leuco dye, such as 3,3-bis(4-dimethylaminophenyl)-6-dimethylaminophthalide, which is referred to as "crystal violet lactone", have an advantage that the color developability thereof can be further enhanced by combining a particular developer, such as an organic halogen compound, which is described later as a preferred developer.

As the coloring agent contained in each of the color developing layers, one kind selected from above may be used alone, or two or more kinds of the components may be used in combination.

The coloring agents in the laminate may be selected in such a manner that the at least two color developing layers develop different colors from each other, and is preferably selected in such a manner that the at least three color developing layers develop different colors from each other. Therefore, it is preferred that the at least two color developing layers contain the coloring agents different from each other, and it is also preferred that the at least three color developing layers contain the coloring agents different from each other.

It is preferred that the coloring agents of the color developing layers each are appropriately selected to develop colors selected from a cyan color, a magenta color, and a yellow color. More specifically, it is preferred that the laminate includes at least two layers selected from a color developing layer containing a coloring agent developing a cyan color (i.e., a cyan coloring agent), a color developing layer containing a coloring agent developing a magenta color (i.e., a magenta coloring agent), and a color developing layer containing a coloring agent developing a yellow color (i.e., a yellow coloring agent), and it is more preferred that the laminate includes all the three layers. All the three layers included therein enable full color development with high quality.

The cyan coloring agent may be, for example, a coloring agent that has a maximum absorption wavelength in a range of more than 580 nm and 780 nm or less in coloring in the color developing layer. Preferred examples of the cyan coloring agent include "CVL", "BLUE 220", and "BLUE 203", available from YAMADA CHEMICAL CO., LTD., and "LCV", available from TOKYO CHEMICAL INDUSTRY CO., LTD. The magenta coloring agent may be, for example, a coloring agent that has a maximum absorption wavelength in a range of more than 480 nm and 580 nm or less in coloring in the color developing layer. Preferred examples of the magenta coloring agent include "RED 40", available from Yamamoto Chemicals Inc., and "RED 500" and "RED 520", available from YAMADA CHEMICAL CO., LTD. The yellow coloring agent may be, for example, a coloring agent that has a maximum absorption wavelength in a range 380 nm or more and 480 nm or less in coloring in the color developing layer. Preferred examples of the yellow coloring agent include "H-29005", available from YAMADA CHEMICAL CO., LTD. The coloring agent used may be, for example, those described in JP 2005-250451 A.

### [Developer]

The developer used may be a compound that reacts with the coloring agent through heating or energy of laser light, so as to allow the coloring agent to develop color. The developer generally has electron acceptability, and the developer having electron acceptability is reacted with the basic leuco colorant described above.

The thermal decomposition temperature of the developer is preferably 200°C or more. In the case where the thermal decomposition temperature of the developer is 200°C or more, the developer can allow the coloring agent to develop color properly in the laminate without thermal decomposition of the developer in forming the color developing layer or the like. From this standpoint, the thermal decomposition temperature of the developer is more preferably 240°C or more, further preferably 280°C or more, and particularly preferably 300°C or more. The thermal decomposition temperature of the developer is not particularly limited, and may be such a value that the weight thereof is not decreased by 5% in heating to 350°C according to the measurement method described above, i.e., may exceeds 350°C.

The crystalline melting temperature of the developer is preferably 100°C or more. In the case where the crystalline melting temperature of the developer is 100°C or more, the developer can be prevented from bleeding to the surface in the case where the color developing layer is formed, and in the case where the laminate is used in a card or a passport under a high temperature environment. From the above standpoint, the crystalline melting temperature of the developer is more preferably 120°C or more, and further preferably 140°C or more. The crystalline melting temperature of the developer is preferably a certain temperature or more from the standpoint of preventing color development in kneading and in forming the color developing layer as described later. From this standpoint, the crystalline melting temperature of the developer is preferably 200°C or more, and particularly preferably 240°C or more.

The crystalline melting temperature of the developer is preferably 350°C or less. In the case where the crystalline melting temperature thereof is 350°C or less, the dispersibility of the developer in forming the color developing layer is improved, preventing the color development unevenness and the deterioration in mechanical strength from occurring. From the above standpoint, the crystalline melting temperature of the developer is more preferably 320°C or less, further preferably 300°C or less, and still further preferably 280°C or less.

As described later, the crystalline melting temperature of the developer is preferably higher than the crystalline melting temperature of the coloring agent for facilitating dispersion or dissolution thereof properly in the resin without color development of the coloring agent in kneading, and is more preferably higher than the crystalline melting temperature of the coloring agent by 10°C or more, further preferably by 30°C or more, and still further preferably by 50°C or more.

In the color developing layer, while not limiting, it is preferred that the developer is not sealed in another material, such as capsules, but for example, the compound itself constituting the developer described later is dispersed or dissolved in the resin.

The developer may be a developer having an absorption peak of the light transmission spectrum around the wavelength of laser light to be radiated. A developer having an absorption peak in a wavelength range of (λ-120) nm or more and (λ+120) nm or less is more preferred, in which λ nm represents a wavelength of laser light to be radiated. The wavelength range is more preferably (λ-90) nm or more and (λ+90) nm or less, further preferably (λ-60) nm or more and (λ+60) nm or less, still further preferably (λ-40) nm or more and (λ+40) nm or less, and still more further preferably (λ-20) nm or more and (λ+20) nm or less. The use of the developer having an absorption peak in the wavelength range further facilitates the reaction of the developer and the coloring agent through laser irradiation, and can provide color development with a sufficient density, to facilitate marking of clear letters, images, and the like. Furthermore, multiple colors can be easily developed with irradiation of laser light having one prescribed wavelength, and the configuration of the apparatus for laser marking the laminate can be simplified.

For example, in the case where the wavelength of laser light to be radiated is 355 nm, a developer having an absorption peak in a wavelength range of 235 nm or more and 475 nm or less is more preferred, a developer having an absorption peak in a wavelength range of 265 nm or more and 445 nm or less is further preferred, a developer having an absorption peak in a wavelength range of 295 nm or more and 415 nm or less is still further preferred, a developer having an absorption peak in a wavelength range of 315 nm or more and 395 nm or less is still more further preferred, and a developer having an absorption peak in a wavelength range of 325 nm or more and 375 nm or less is even further preferred.

As described later, the wavelength of laser light to be radiated to the laminate for laser marking is preferably 200 nm or more and 1,500 nm or less, more preferably 250 nm or more and 1,200 nm or less, further preferably 300 nm or more and 900 nm or less, still further preferably in the visible light region or the ultraviolet ray region, i.e., less than 780 nm, still more further preferably 300 nm or more and 600 nm or less, even further preferably 320 nm or more and 500 nm or less, and even still further preferably 340 nm or more and 400 nm or less. From the standpoint of the wavelength of laser light to be radiated, the developer used in the color developing layer is preferably a developer having an absorption peak in 250 nm or more and 1,200 nm or less, further preferably 280 nm or more and 900 nm or less, still further preferably in the visible light region or the ultraviolet ray region, i.e., less than 780 nm, still more further preferably 300 nm or more and 600 nm or less, even further preferably 320 nm or more and 500 nm or less, even still further preferably 330 nm or more and 400 nm or less, and even more still further preferably 340 nm or more and 370 nm or less.

Preferred specific examples of the developer include a triazine based compound, a bisphenol based compound, a urea based compound, a novolac-typed phenol based compound, and an organic halogen compound. Among these, an organic halogen compound is preferred. An organic halogen compound often has absorption in a low wavelength range, and the use thereof facilitates the color development of the coloring agent through laser irradiation on a relatively low wavelength side, facilitating the favorable use thereof for inner marking.

Examples of the triazine based compound include a compound represented by the following formula (4). A compound represented by the formula (4) generally has a tautomer, and the triazine based compound is at least any of a compound represented by the following formula (4) and a tautomer thereof.

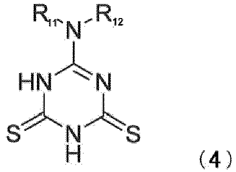

In the formula, R₁₁ and R₁₂ each independently represent a hydrogen atom, a saturated or unsaturated hydrocarbon group having 1 to 18 carbon atoms or a cycloalkyl group having 5 to 12 carbon atoms, which may be substituted by a halogen atom, a cyano group, an alkoxy group, an alkoxycarbonyl group, or an acyloxy group, or an aryl group or an aralkyl group, which may be substituted by a halogen atom, a lower alkyl group having 1 to 4 carbon atoms, or a lower alkoxy group. R₁₁ and R₁₂ may form a heterocyclic ring with the adjacent nitrogen atom.

Among these, from the standpoint of the color development sensitivity and the storage stability, it is preferred that R₁₁ represents a chain-like hydrocarbon group having 5 to 18 carbon atoms having a branched structure, and R₁₂ represents a hydrogen atom or a hydrocarbon group having 1 to 4 carbon atoms. The number of carbon atoms of the chain-like hydrocarbon group represented by R₁₁ is preferably 6 to 12, more preferably 7 to 10, and most preferably 8. R₁₂ preferably represents a hydrogen atom or a hydrocarbon group having 1 or 2 carbon atoms, more preferably a hydrogen atom or a methyl group, and most preferably a hydrogen atom.

Specific preferred examples of the triazine based compound include 6-[(2-ethylhexyl)amino]-1,3,5-triazine-2,4(1H,3H)-dithione.

The compound represented by the formula (4) can become a compound having an -SH group represented by the following formula (5) through tautomerization.

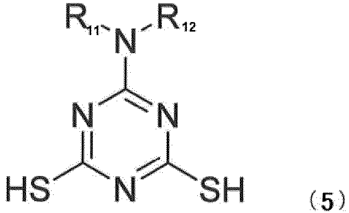

In the formula (5), R₁₁ and R₁₂ are the same as above.

Examples of the bisphenol based compound include bisphenol A, bisphenol AP, bisphenol B, bisphenol C, bisphenol S, bisphenol P, bisphenol M, and a compound having diphenylsulfide or the like as a basic skeleton.

More specific examples of the bisphenol based compound include 4,4'-isopropylidenediphenol, 2,2'-bis(4-hydroxy-3-methylphenyl)propane, 1,1-bis(4-hydroxyphenyl)cyclohexane, 2,2-bis(4-hydroxyphenyl)-4-methylpentane, 4,4'-dihydroxydiphenyl sulfide, di(4-hydroxy-3-methylphenyl)sulfide, 2,2'-thiobis(3-tert-octylphenol), 2,2'-thiobis(4-tert-octylphenol), 4,4'-dihydroxydiphenyl sulfone, 2,4'-dihydroxydiphenyl sulfone, 4-hydroxy-4'-n-propoxy-diphenyl sulfone, 4-hydroxy-4'-isopropoxy-diphenyl sulfone, 4-hydroxy-4'-allyloxy-diphenyl sulfone, bis(3-allyl-4-hydroxyphenyl)sulfone, 4-hydroxyphenyl-4'-benzyloxyphenyl sulfone, 3,4-dihydroxyphenyl-4'-methylphenyl sulfone, 2,4-bis(phenylsulfonyl)phenol, the bisphenolsulfone crosslinked compound described in Japanese Patent No. 3,913,820, and the bisphenolsulfone derivative described in Japanese Patent No. 4,004,289.

Examples of the urea based compound include amino acid derivatives, such as 4,4'-bis(3-(phenoxycarbonylamino)methylphenylureido)diphenyl sulfone, N-(p-toluenesulfonyl)-N'-(3-p-toluenesulfonyloxyphenyl)urea described in Japanese Patent No. 4,601,174, 4,4'-bis(3-tosylureido)diphenylmethane described in JP 2011-105638 A, N-[2-(3-phenylureido)phenyl]benzenesulfonamide described in JP 2016-165835, N-[2-(acetoxy)phenyl]-N'-phenylurea described in JP 2017-165091 A, N-[3-(acetoxy)phenyl]-N'-phenylurea, N-[2-(benzoyloxy)phenyl]-N'-phenylurea, N-[3-(benzoyloxy)phenyl]-N'-phenylurea, N-(m-tolylaminocarbonyl)phenylalanine described in WO 2017/047572, N-(p-toluenesulfonyl)phenylalanine, N-(benzyloxycarbonyl)valine, N-(m-tolylaminocarbonyl)methionine, N-(m-tolylaminocarbonyl)tyrosine, N-(m-tolylaminocarbonyl)phenylglycine, N-(m-tolylaminocarbonyl)valine, N-(m-tolylaminocarbonyl)cysteine-S-benzyl, N-(m-tolylaminocarbonyl)β-alanine, N-phenylaminothiocarbonyl-glycylglycine, N-(p-toluenesulfonylaminocarbonyl)phenylalanine methyl ester, N-(p-toluenesulfonyl)β-alanine, N-(p-tolylaminocarbonyl)methionine, and N-(phenylaminocarbonyl)-methionine.

Examples of the novolac-typed phenol based compound include the phenol-formalin condensate described in WO 02/098674.

Examples of the organic halogen compound include an aromatic halogen compound. The aromatic halogen compound may have one or more halogen atom bonded to the aromatic moiety, and preferably has a plurality of halogen atoms. Examples of the organic halogen compound include a bromine-containing compound, such as bromobenzene, dibromobenzene, tribromobenzene, tetrabromobenzene, pentabromobenzene, hexabromobenzene, pentabromotoluene, tetrabromotoluene, tribromotoluene, dibromotoluene, bromotoluene, decabromodiphenyl ether, nonabromodiphenyl ether, octabromodiphenyl ether, heptabromodiphenyl ether, hexabromodiphenyl ether, pentabromodiphenyl ether, tetrabromodiphenyl ether, tribromodiphenyl ether, and dibromodiphenyl ether, and a chlorine-containing compound, such as chlorobenzene, dichlorobenzene, trichlorobenzene, tetrachlorobenzene, pentachlorobenzene, and hexachlorobenzene.

Examples of the developer include, in addition to the compounds described above, an inorganic acidic substance, such as activated clay, attapulgite, colloidal silica, and aluminum silicate, hydroquinone monobenzyl ether, benzyl 4-hydroxybenzoate, the aminobenzenesulfonamide derivative described in JP 8-59603 A, bis(4-hydroxyphenylthioethoxy)methane, 1,5-di(4-hydroxyphenylthio)-3-oxapentane, butyl bis(p-hydroxyphenyl)acetate, methyl bis(p-hydroxyphenyl)acetate, 1,1-bis(4-hydroxyphenyl)-1-phenylethane, 1,4-bis[α-methyl-α-(4'-hydroxyphenyl)ethyl]benzene, 1,3-bis[α-methyl-α-(4'-hydroxyphenyl)ethyl]benzene, the compounds described in WO 02/081229 and JP 2002-301873 A, a thiourea compound, such as N,N'-di-m-chlorophenylthiourea, p-chlorobenzoic acid, stearyl gallate, zinc bis[4-(octyloxycarbonylamino)salicylate] dihydrate, an aromatic carboxylic acid, such as 4-[2-(p-methoxyphenoxy)ethyloxy]salicylic acid, 4-[3-(p-tolylsulfonyl)propyloxy]salicylic acid, and 5-[p-(2-p-methoxyphenoxyethoxy)cumyl]salicylic acid, salts of the aromatic carboxylic acids with a polyvalent metal, such as zinc, magnesium, aluminum, calcium, titanium, manganese, tin, and nickel, an antipyrine complex of zinc thiocyanate, and a composite zinc salt of terephthalaldehydic acid and another aromatic carboxylic acid. Examples thereof also include the metal chelate complex of a higher fatty acid metal double salt and a polyvalent hydroxyaromatic compound, and the like described in JP 10-258577 A.

In the present invention, as the developer contained in each of the color developing layers, one kind selected from the above may be used alone, or two or more kinds of the components may be used in combination. In the case where the developer is contained in the multiple color developing layers, the developers contained in the different color developing layers may be the same compound or may be different compounds.

### [Photothermal Conversion Agent]

The color developing layer in the laminate of the present invention may contain a photothermal conversion agent. The photothermal conversion agent converts the light energy absorbed through laser irradiation to heat, and thereby the color developing layer containing the photothermal conversion agent is heated. With the photothermal conversion agent contained, the color developing layer is easily heated through laser irradiation, and easily develops color. However, the color developing layer may not contain a photothermal conversion agent. The color developing layer can properly also develop color through laser irradiation in a particular wavelength range by using the particular developer and coloring agent or by using the particular resin, even though a photothermal conversion agent is not contained therein.

The photothermal conversion agent may absorb light, for example, in a wavelength range of 200 to 3,500 nm, preferably in a wavelength range of 200 to 3,000 nm, and more preferably in a wavelength range of 200 to 1,500 nm, and may generate heat.

The photothermal conversion agent is preferably a near infrared ray absorbent, and the near infrared ray absorbent is preferably an organic colorant. Examples of the organic colorant include a cyanine based colorant, a phthalocyanine based colorant, a naphthalocyanine based colorant, a squarylium based colorant, a quinone based colorant, a polymethine based colorant, a diimonium based colorant, an azo based colorant, a phenylenediamine based colorant, a diphenylmethane based colorant, a triphenylmethane based colorant, a pyrrolopyrrole based colorant, and a metal complex based colorant. Among these, a phthalocyanine based colorant, a diimonium based colorant, and a squarylium based colorant are preferred due to the excellent durability thereof.

The photothermal conversion agent used may be a commercially available product. Examples of the usable commercially available product of the photothermal conversion agent include "ABS-626", "ABS-642", "ABS643", "ABS654", "ABS667", "ABS670T", "ABS-699", "IRA-677", "IRA693N", "IRA735", "IRA800", "IRA850", and "IRA868", available from Exciton, Inc.), "TAP-15" and "IR-706", available from YAMADA CHEMICAL CO., LTD., "PD-320", "YKR-2900", and "YKR-3080", available from Yamamoto Chemicals Inc., "IR-1", "IR-10A", "IR-12", "IR-14", "TX-EX906B", and "TX-EX910B", available from NIPPON SHOKUBAI CO., LTD., "Kayasorb IRG-068", "Kayasorb IRG-069", and "Kayasorb IRG-079", available from Nippon Kayaku Co., Ltd., "CIR-1085" and "CIR-RL", available from Japan Carlit Co., Ltd., and "Lumogen IR765" and "Lumogen IR788", available from BASF GmbH. Among these, "IRA-677", "ABS-626", and "ABS-699" are preferred due to the small absorption in the visible light region thereof.

The photothermal conversion agent used may be a compound known as a so-called ultraviolet ray absorbent that can be used as the additional additives described later.

As the photothermal conversion agent contained in the color developing layer, one kind selected from the above may be used alone, or two or more kinds of the components may be used in combination. It is preferred that the photothermal conversion agent is contained in the color developing layer containing the coloring agent, or containing the coloring agent and the developer. The photothermal conversion agent may be contained in at least one color developing layer of the multiple color developing layers of the laminate, and may be contained in each of the multiple color developing layers. The photothermal conversion agents contained in the different color developing layers may be the same compound or may be different compounds.

In the case where the color developing layer contains the photothermal conversion agent, the content of the photothermal conversion agent in the color developing layer containing the photothermal conversion agent is preferably 0.0005 part by mass or more and 1 part by mass or less, more preferably 0.001 part by mass or more and 0.5 part by mass or less, further preferably 0.003 part by mass or more and 0.3 part by mass or less, and particularly preferably 0.005 part by mass or more and 0.1 part by mass or less, per 100 parts by mass of the resin. In the case where the content of the photothermal conversion agent in the color developing layer is 0.0005 part by mass or more, the color developing layer containing the photothermal conversion agent can be rapidly heated through laser irradiation, and the heating can allow the coloring agent contained in the color developing layer to develop color properly. In the case where the content thereof is 1 part by mass or less, an effect corresponding to the content can be obtained, and the mechanical strength, the transparency, and the like of the color developing layer can also be easily secured.

### [Sensitizer]

The color developing layers each may contain a sensitizer. The sensitizer is not particularly limited, and examples thereof used include 1,2-di(3-methylphenoxy)ethane, 2-benzyloxynaphthalene, a fatty acid amide having 10 to 21 carbon atoms (such as stearic acid amide and palmitic acid amide), ethylenebisamide, montanic acid wax, polyethylene wax, p-benzylbiphenyl, diphenyl sulfone, 4-biphenylyl p-tolyl ether, m-terphenyl, 1,2-diphenoxyethane, dibenzyl oxalate, di(p-chlorobenzyl) oxalate, di(p-methylbenzyl) oxalate, dibenzyl terephthalate, benzyl p-benzyloxybenzoate, di-p-tolyl carbonate, phenyl-α-naphthyl carbonate, 1,4-diethoxynaphthalene, phenyl 1-hydroxy-2-naphthoate, o-xylylenebis(phenyl ether), 4-(m-methylphenoxymethyl)biphenyl, dibenzyl 4,4'-ethylenedioxybisbenzoate, dibenzoyloxymethane, 1,2-di(3-methylphenoxy)ethane, bis[2-(4-methoxyphenoxy)ethyl] ether, methyl p-nitrobenzoate, and phenyl p-toluenesulfonate. Among these, 1,2-di(3-methylphenoxy)ethane, 1,2-diphenoxyethane, a fatty acid amide having 10 to 21 carbon atoms (such as stearic acid amide and palmitic acid amide), 2-benzyloxynaphthalene, diphenyl sulfone, p-toluenesulfonamide, and di(p-methylbenzyl) oxalate are preferred, and 1,2-di(3-methylphenoxy)ethane is particularly preferred due to the high coloring sensitivity with low energy.

As the sensitizer in each of the color developing layer, one kind thereof may be used alone, or two or more kinds thereof may be used in combination. It is preferred that the sensitizer is added to the color developing layer containing the coloring agent, or containing the coloring agent and the developer. The sensitizer may be contained in at least one color developing layer of the multiple color developing layers of the laminate, and may be contained in each of the multiple color developing layers. The sensitizers contained in the different color developing layers may be the same compound or may be different compounds.

In the case where the color developing layer contains the sensitizer, the content of the sensitizer in the color developing layer containing the sensitizer is preferably 25 parts by mass or more and 250 parts by mass or less, and more preferably 50 parts by mass or more and 150 parts by mass or less, per 100 parts by mass of the resin.

### [Compound (X)]

The color developing layer in the laminate may contain a compound (X) having a primary acid dissociation constant (pKa) of 9 or more. With the compound (X) contained, the color developing layer has a tendency that the coloring agent and the developer are prevented from bleeding out.

The primary acid dissociation constant (pKa) of the compound (X) is a value in a case where water at 25°C is used as a solvent, and can be measured, for example, by the method described in The Journal of Physical Chemistry vol. 68, number 6, page 1560 (1964) using an automatic potentiometric titrator (COM-980Win), available from HIRANUMA Co., Ltd., or the like. The acid dissociation constants described in Chemical Handbook edited by The Chemical Society of Japan (3rd ed., published on June 25, 1984 by Maruzen Co., Ltd.) and the database, such as pKaBASE, available from CompuDrug Ltd. can also be used. The primary acid dissociation constant (pKa) of a compound that undergoes multistage dissociation means the pKa value in the first stage dissociation.

Specific examples of the compound (X) include a metal hydroxide, such as sodium hydroxide, potassium hydroxide, rubidium hydroxide, and cesium hydroxide; an organic ammonium salt, such as tetramethylammonium hydroxide (TMAH), ammonium acetate, and ammonium formate; an organic potassium salt, such as potassium acetate, and potassium formate; various amines and ammonia, for example an alkanolamine, such as monoethanolamine, diethanolamine, triethanolamine, N-methylethanolamine, N-methyl-N,N-diethanolamine, N,N-dimethylethanolamine, N,N-diethylethanolamine, N,N-dibutylethanolamine, N-(β-aminoethyl)ethanolamine, N-ethylethanolamine, monopropanolamine, dipropanolamine, tripropanolamine, monoisopropanolamine, diisopropanolamine, and triisopropanolamine;, a primary amine, such as methylamine, ethylamine, propylamine, butylamine, pentylamine, and 1,3-propanediamine; a secondary amine, such as piperidine and piperazine; and a tertiary amine, such as trimethylamine, triethylamine ammonia; and also include potassium iodide, sodium thiosulfate, iron oxide, tin chloride, sodium cyanoborohydride, lithium borohydride, and sodium borohydride.

In each of the color developing layers, one kind of the compound (X) may be used alone, or two or more kinds thereof may be used with being mixed.

In the compound (X), at least one kind selected from the group consisting of sodium hydroxide, potassium hydroxide, ammonia, ammonium acetate, potassium acetate, ammonium formate, and potassium formate is preferred, and potassium acetate is most preferred.

It is preferred that the compound (X) is contained in the color developing layer containing the coloring agent, or the coloring agent and the developer. The compound (X) may be contained in at least one color developing layer of the multiple color developing layers of the laminate, or may be contained in each of the multiple color developing layers. The compounds (X) contained in the different color developing layers may be the same compound, or may be different compounds.

In the case where each of the color developing layers contains the compound (X), the content of the compound (X) in the color developing layer containing the compound (X) is preferably 0.001 part by mass or more and 10 parts by mass or less, more preferably 0.002 part by mass or more and 5 parts by mass or less, further preferably 0.003 part by mass or more and 3 parts by mass or less, and particularly preferably 0.005 part by mass or more and 1 part by mass or less, per 100 parts by mass of the resin constituting the color developing layer.

### [Additional Additives]

The color developing layers each may contain one or more kind of an additive (additional additive) selected from a thermal stabilizer, an antioxidant, an ultraviolet ray absorbent, a light stabilizer, and the like, in addition to the above. The color developing layers each may appropriately contain known additives in addition to the above. The additional additive may be contained in one color developing layer of the multiple color developing layer described above, may be contained in two or more color developing layers thereof, and may be contained in all the color developing layers. The kinds of the additional additives contained in the color developing layers may be the same as or different from each other.

### (Thermal Stabilizer)

The color developing layer can be enhanced in thermal stability by containing a thermal stabilizer. Examples of the thermal stabilizer include a phosphorus based compound. The phosphorus based compound used may be a known compound. Specific examples thereof include an oxo acid of phosphorous, such as phosphoric acid, phosphonic acid, phosphorous acid, phosphinic acid, and polyphosphoric acid, an acidic pyrophosphoric acid metal salt, such as acidic sodium pyrophosphate, acidic potassium pyrophosphate, and acidic calcium pyrophosphate, a phosphate of a Group 1 or Group 2B metal, such as potassium phosphate, sodium phosphate, cesium phosphate, and zinc phosphate, an organic phosphite compound, an organic phosphate compound, and an organic phosphonite compound. Metal salts of an organic phosphate compound, an organic phosphite compound, and an organic phosphonite compound may also be used.

Examples of the organic phosphite compound include various phosphite esters, such as triphenyl phosphite, tris(monononylphenyl) phosphite, tris(monononyl/dinonylphenyl) phosphite, tris(2,5-di-tert-butylphenyl) phosphite, tris(2,4-di-tert-butylphenyl) phosphite, tris[2,4-bis(1,1-dimethylpropyl)phenyl] phosphite, tris(mono-/di-tert-butylphenyl) phosphite, monooctyl diphenyl phosphite, dioctyl monophenyl phosphite, monodecyl diphenyl phosphite, didecyl monophenyl phosphite, tridecyl phosphite, trilauryl phosphite, tristearyl phosphite, 2,2'-methylenebis(4,6-di-tert-butylphenyl)octyl phosphite, 4,4'-butylidene-bis(3-methyl-6-tert-butylphenyl ditridecyl phosphite), cyclic neopentantetraylbis(2,6-di-tert-butyl-4-methylphenyl phosphite), and 3,9-bis(2,6-di-tert-butyl-4-methylphenoxy)-2,4,8, 10-tetraoxa-3,9-diphosphaspiro[5.5]undecane. Among these, a trialkyl phosphite, such as tris(2,4-di-tert-butylphenyl) phosphite and tristearyl phosphite, is preferred.

The organic phosphite compound used may be a phosphite ester having at least one oxetane group. The oxetane group-containing phosphite ester may contain one, two, or three oxetane groups.

Examples of the oxetane group-containing phosphite ester include tris[(3-ethyloxetan-3-yl)methyl] phosphite, bis[(3-ethyloxetan-3-yl)methyl] phosphite, mono[(3-ethyloxetan-3-yl)methyl] phosphite, tris[(3-pentyloxetan-3-yl)methyl] phosphite, bis[(3-pentyloxetan-3-yl)methyl] phosphite, tris[(3-hexadecyloxetan-3-yl)methyl] phosphite, bis[(3-hexadecyloxetan-3-yl)methyl] phosphite, tris[(3-phenyloxetan-3-yl)methyl] phosphite, bis[(3-phenyloxetan-3-yl)methyl] phosphite, tris[(3-p-tolyloxetan-3-yl)methyl] phosphite, bis[(3-p-tolyloxetan-3-yl)methyl] phosphite, tris[(3-benzyloxetan-3-yl)methyl] phosphite, bis[(3-benzyloxetan-3-yl)methyl] phosphite, phenylbis[(3-ethyloxetan-3-yl)methyl] phosphite, 2-phenoxyspiro(1,3,2-dioxaphosphorinane-5,3'-oxetane), 3,3-bis[spiro(oxetane-3',5"-(1",3",2"-dioxa-2"-phosphorinan))oxymethyl] oxetane, and P,P'-[(1-methylethylidene)-di-4,1-phenylene]-P,P,P',P'-tetrakis[(3-ethyl-3-oxetanyl)methyl] phosphite. The oxetane group-containing phosphite esters described in U.S. Patent No. 3,209,013 may also be appropriately used. The use of the oxetane group-containing phosphite ester facilitates the enhancement of the chromatic strength after the coloring agent develops color.

The organic phosphate compound is preferably an organic phosphate compound or a metal salt of an organic phosphate compound, and the metal is preferably at least one kind of a metal selected from Groups Ia, IIa, IIb, IIIa, and IIIb of the Periodic Table, in which magnesium, barium, calcium, zinc, and aluminum are more preferred, and magnesium, calcium, and zinc are particularly preferred.

The organic phosphate compound is preferably an acidic organic phosphate ester and a metal salt thereof. Examples of the acidic organic phosphate ester include a dialkyl acid phosphate, a monoalkyl acid phosphate, a diaryl acid phosphate, and a monoalkyl monoaryl acid phosphate, in which a dialkyl acid phosphate and a monoalkyl acid phosphate are preferred. The alkyl group in the acidic organic phosphate ester is, for example, an alkyl group having 1 to 30 carbon atoms, and the number of carbon atoms thereof is preferably 2 to 25, and more preferably 6 to 23. The number of carbon atoms of the aryl group may be approximately 6 to 30.

Specific preferred examples of the organic phosphate compound include zinc bis(distearyl acid phosphate), zinc monostearyl acid phosphate, aluminum tris(distearyl acid phosphate), a salt of monostearyl acid phosphate and two molecules of aluminum monostearyl acid phosphate, monostearyl acid phosphate, and distearyl acid phosphate. Among these, zinc bis(distearyl acid phosphate) and zinc monostearyl acid phosphate are more preferred.

Examples of the organic phosphonite compound include tetrakis(2,4-diisopropylphenyl)-4,4'-biphenylenediphosphonite, tetrakis(2,4-di-n-butylphenyl)-4,4'-biphenylenediphosphonite, tetrakis(2,4-di-tert-butylphenyl)-4,4'-biphenylenediphosphonite, tetrakis(2,4-di-tert-butylphenyl)-4,3'-biphenylenediphosphonite, tetrakis(2,4-di-tert-butylphenyl)-3,3'-biphenylenediphosphonite, tetrakis(2,6-diisopropylphenyl)-4,4'-biphenylenediphosphonite, tetrakis(2,6-di-n-butylphenyl)-4,4'-biphenylenediphosphonite, tetrakis(2,6-di-tert-butylphenyl)-4,4'-biphenylenediphosphonite, tetrakis(2,6-di-tert-butylphenyl)-4,3'-biphenylenediphosphonite, and tetrakis(2,6-di-tert-butylphenyl)-3,3'-biphenylenediphosphonite.

In the phosphorus based compounds above, an organic phosphite compound is preferred from the standpoint of enhancing the thermal stability and suppressing the oxidation. The organic phosphite compound is also preferably used in combination with the antioxidant described later, and specifically preferably used in combination with a phenol based antioxidant. The combination use with a phenol based antioxidant can effectively prevent the resin from undergoing the decrease in molecular weight and the yellowing in forming the film through extrusion. Furthermore, both the stability in forming the film through extrusion and the long-term stability of the molded product (laminate) can also be achieved simultaneously. In addition, a phenol based antioxidant often has absorption in a low wavelength range, and therefore the presence thereof in the color developing layer provides an advantage that the coloring agent can more easily develop color through laser irradiation on the low wavelength side with large energy.

The phosphorus based compound can also be used as an ester exchange inhibitor inhibiting the ester exchange reaction of a polyester resin and a polycarbonate resin. Therefore, in the case where one of the two color developing layers directly laminated or the color developing layer and the intermediate layer described later contains a polyester resin, and the other thereof contains a polycarbonate resin, or in the case where a polyester resin and a polycarbonate resin are used in combination in the color developing layer or the intermediate layer, the use of the phosphorus based compound can inhibit the ester exchange reaction, thereby further enhancing the thermal stability. Furthermore, in the case where the laminate is used in a passport or a card, the ester exchange of a polyester resin and a polycarbonate resin constituting a layer adjacent to the laminate, such as a core sheet and a protective layer described later, can also be inhibited. In the phosphorus based compound above, an organic phosphate compound is preferred from the standpoint of the inhibition of the ester exchange reaction.

In each of the color developing layers, only one kind of the thermal stabilizer may be used, or two or more kinds thereof may be used in combination. The thermal stabilizer may be contained in at least one color developing layer of the multiple color developing layers, or may be contained in each of the multiple color developing layers. The thermal stabilizers contained in the different color developing layers may be the same compound or may be different compounds.

In the case where the color developing layer contains the thermal stabilizer, the content of the thermal stabilizer in the color developing layer containing the thermal stabilizer is preferably 0.001 part by mass or more and 5 parts by mass or less, more preferably 0.01 part by mass or more and 1 part by mass or less, further preferably 0.05 part by mass or more and 0.7 part by mass or less, and particularly preferably 0.1 part by mass or more and 0.5 part by mass or less, per 100 parts by mass of the resin constituting each of the color developing layers.

### [Antioxidant]

Examples of the antioxidant used include a phenol based antioxidant and a sulfur based antioxidant. Among these, a phenol based antioxidant is preferred.

Examples of the phenol based antioxidant include α-tocopherol, 4-methoxyphenol, 4-hydroxyphenyl (meth)acrylate, β-tocopherol, 2,6-di-tert-butylphenol, 2,6-di-tert-4-methoxyphenol, 2-tert-butyl-4-methoxyphenol, 2,4-dimethyl-6-tert-butylphenol, 2,6-di-tert-butyl-4-methylphenol (butylated hydroxytoluene, BHT), and stearyl β-(3,5-di-tert-butyl-4-hydroxyphenyl)propionate. Among these, 2,6-di-tert-butyl-4-methylphenol (butylated hydroxytoluene, BHT) is preferred. A compound having a hindered phenol skeleton is also preferred. Examples thereof include pentaerythritol tetrakis[3-(3,5-di-tert-butyl-4-hydroxyphenyl)propionate], octadecyl 3-(3,5-di-tert-butyl-4-hydroxyphenyl)propionate, thiodiethylene bis[3-(3,5-di-tert-butyl-4-hydroxyphenyl)propionate], N,N'-hexane-1,6-diylbis[3-(3,5-di-tert-butyl-4-hydroxyphenylpropionamide)], 2,4-dimethyl-6-(1-methylpentadecyl)phenol, diethyl [[3,5-bis(1,1-dimethylethyl)-4-hydroxyphenyl]methyl]phosphonate, 3,3',3",5,5',5"-hexa-tert-butyl-α,α',α"-(mesitylene-2,4,6-triyl)tri-p-cresol, 4,6-bis(octylthiomethyl)-o-cresol, ethylene bis(oxyethylene)bis[3-(5-tert-butyl-4-hydroxy-m-tolyl)propionate], hexamethylene bis[3-(3,5-di-tert-butyl-4-hydroxyphenyl)propionate], 1,3,5-tris(3,5-di-tert-butyl-4-hydroxybenzyl)-1,3,5-triazine-2,4,6(1H,3H,5H)-trione, 2,6-di-tert-butyl-4-(4,6-bis(octylthio)-1,3,5-triazin-2-ylamino)phenol, and 2-[1-(2-hydroxy-3,5-di-tert-pentylphenyl)ethyl]-4,6-di-tert-pentylphenyl acrylate. In the hindered phenol based antioxidant, pentaerythritol tetrakis[3-(3,5-di-tert-butyl-4-hydroxyphenyl)propionate] and octadecyl 3-(3,5-di-tert-butyl-4-hydroxyphenyl)propionate are preferred.

Examples of the sulfur based antioxidant include thiodipropionic acid, dilauryl thiodipropionate, distearyl thiodipropionate, lauryl stearyl thiodipropionate, dimyristyl thiodipropionate, distearyl β,β'-thiodibutyrate, thiobis(β-naphthol), thiobis(N-phenyl-β-naphthylamine), 2-mercaptobenzothiazole, 2-mercaptobenzimidazole, tetramethylthiuram monosulfide, tetramethylthiuram disulfide, and nickel dibutyldithiocarbamate.

In each of the color developing layers, only one kind of the antioxidant may be used, or two or more kinds thereof may be used in combination. The antioxidant may be contained in at least one color developing layer of the multiple color developing layers, or may be contained in each of the multiple color developing layers. The antioxidants contained in the different color developing layers may be the same compound or may be different compounds.

In the case where the color developing layer contains the antioxidant, the content of the antioxidant in the color developing layer containing the antioxidant is preferably 0.01 part by mass or more and 4 parts by mass or less, more preferably 0.03 part by mass or more and 2 parts by mass or less, further preferably 0.05 part by mass or more and 1 part by mass or less, and particularly preferably 0.08 part by mass or more and 0.5 part by mass or less, per 100 parts by mass of the resin constituting each of the color developing layers.

### [Ultraviolet Ray Absorbent]

The color developing layer may contain an ultraviolet ray absorbent. With the color developing layer containing an ultraviolet ray absorbent, the light resistance and the weather resistance thereof can be enhanced, and a card or a passport produced by using the laminate can be prevented from suffering light degradation. In addition, an ultraviolet ray absorbent often has absorption in a low wavelength range, and therefore the presence thereof in the color developing layer provides an advantage that the coloring agent can more easily develop color through laser irradiation on the low wavelength side with large energy.

Examples of the ultraviolet ray absorbent used include an organic ultraviolet ray absorbent such as a benzotriazole based ultraviolet ray absorbent, a triazine based ultraviolet ray absorbent such as a hydroxyphenyltriazine based ultraviolet ray absorbent, and a cyclic imino ester based ultraviolet ray absorbent.

Examples of the benzotriazole based ultraviolet ray absorbent include compounds represented by 2-phenol, 2-(2H-benzotriazol-2-yl)-4-(1,1,3,3-tetramethylbutyl), 2-(2'-hydroxy-5'-methylphenyl)benzotriazole, 2-(2'-hydroxy-3',5'-di-tert-amylphenyl)benzotriazole, 2-(2'-hydroxy-3',5'-di-tert-butylphenyl)benzotriazole, 2-(2'-hydroxy-3',5'-bis(α,α'-dimethylbenzyl)phenyl)benzotriazole, 2-(2'-hydroxy-3',5'-di-tert-butylphenyl)-5-chlorobenzotriazole, 2-(2'-hydroxy-3'-tert-butyl-5'-methylphenyl)-5-chlorobenzotriazole, 2-(2'-hydroxy-5'-tert-octylphenyl)benzotriazole, 2,2'-methylenebis[4-(1,1,3,3-tetramethylbutyl)-6-(2H-benzotriazol-2-yl)phenol], and a condensate of methyl 3-[3-tert-butyl-5-(2H-benzotriazol-2-yl)-4-hydroxyphenyl]propionate and polyethylene glycol.

Examples of the triazine based ultraviolet ray absorbent include a hydroxyphenyltriazine based ultraviolet ray absorbent, and examples thereof include 2-(4,6-diphenyl-1,3,5-triazin-2-yl)-5-hexyloxyphenol and 2-(4,6-bis(2,4-dimethylphenyl)-1,3,5-triazin-2-yl)-5-hexyloxyphenol.

Examples of the cyclic imino ester based ultraviolet ray absorbent include 2,2'-p-phenylenebis(3,1-benzoxazin-4-one), 2,2'-m(2)-phenylenebis(3,1-benzoxazin-4-one), and 2,2'-4,4'-diphenylenebis(3,1-benzoxazin-4-one).

Examples of the ultraviolet ray absorbent used also include organic ultraviolet ray absorbents, such as a benzophenone based ultraviolet ray absorbent, a salicylate based ultraviolet ray absorbent, a cyanoacrylate based ultraviolet ray absorbent, an oxanilide based ultraviolet ray absorbent, a malonate ester based ultraviolet ray absorbent, and a benzoxazinone based ultraviolet ray absorbent. In addition, inorganic ultraviolet ray absorbents, such as cerium oxide and zinc oxide, may also be used.

In each of the color developing layers, only one kind of the ultraviolet ray absorbent may be used, or two or more kinds thereof may be used in combination. The ultraviolet ray absorbent may be contained in at least one color developing layer of the multiple color developing layers, or may be contained in each of the multiple color developing layers. The ultraviolet ray absorbents contained in the different color developing layers may be the same compound or may be different compounds.

In the case where the color developing layer contains the ultraviolet ray absorbent, the content thereof in the color developing layer containing the ultraviolet ray absorbent is preferably 0.001 part by mass or more and 5 parts by mass or less, more preferably 0.005 part by mass or more and 1 part by mass or less, further preferably 0.01 part by mass or more and 0.7 part by mass or less, still further preferably 0.05 part by mass or more and 0.5 part by mass or less, and particularly preferably 0.1 part by mass or more and 0.3 part by mass or less, per 100 parts by mass of the resin constituting each of the color developing layers.

Examples of the light stabilizer include a hindered amine based compound, a nickel based compound, and a benzoate based compound for enhancing the stability against light. The light stabilizer may be contained in at least one color developing layer of the multiple color developing layers, or may be contained in each of the multiple color developing layers.

### [Layer Configuration]

The laminate of the present invention includes at least two color developing layers as described above, and it is preferred that the at least two color developing layers are directly laminated. Specifically, in the present invention, it is preferred that at least one pair of the color developing layers are directly laminated without another layer therebetween. Such a layer configuration enables multicolor or full color development while decreasing the number of layers of the laminate in the present invention. Therefore, multicolor or full color development can be achieved with a relatively small thickness and with a simple layer configuration.

The laminate also has a preferred embodiment including an intermediate layer between one pair of the color developing layers. The one pair of the color developing layers herein means any one pair of the color developing layers adjacent to each other among the multiple color developing layers provided in the laminate. In the case where an intermediate layer is provided between one pair of the color developing layers, the one pair of the color developing layer may be adhered to each other via the intermediate layer.

In the laminate including the intermediate layer, the coloring agent and the developer in each of the color developing layers can be prevented from migrating to another color developing layer. Furthermore, the color developing layers can be spaced from each other, and thereby in the case where laser irradiation is performed for allowing the prescribed color developing layer to develop color as described later, the other color developing layers can be prevented from developing color through the laser irradiation. Accordingly, the prescribed laser printing can be performed precisely.

The intermediate layer is a resin layer formed of a resin, and the resin used in the intermediate layer may be either a thermosetting resin or a thermoplastic resin, in which a thermoplastic resin is preferred. That is, all the resins contained in the intermediate layer and the color developing layers each are preferably a thermoplastic resin.

The use of a thermoplastic resin in the intermediate layer facilitates kneading, extrusion molding, and the like, improving the moldability of the intermediate layer. In the case where all the intermediate layer and the color developing layers are formed of a thermoplastic resin, the intermediate layer and the color developing layers can be easily laminated to produce the laminate.

Specific examples of the thermoplastic resin used in the intermediate layer and preferred embodiments thereof are the same as the thermoplastic resin used as the color developing layer, and the details thereof have been described above.

The resin used in the intermediate layer is preferably a resin having a high barrier capability from the standpoint of preventing, in the adjacent one pair of the color developing layers, the coloring agent and the developer from migrating from one of the color developing layers to the other of the color developing layers.

The intermediate layer may contain one or both of the coloring agent and the developer in a small amount, as long as being capable of properly exerting the effects obtained by providing the intermediate layer, and it is preferred that both the coloring agent and the developer are not blended therein from the standpoint of preventing erroneous color development in the laser irradiation or the formation of the color developing layer. The content of the coloring agent in the intermediate layer is, for example, less than 0.05 part by mass, preferably less than 0.02 part by mass, more preferably less than 0.01 part by mass, further preferably less than 0.005 part by mass, and particularly preferably 0 part by mass, per 100 parts by mass of the resin. The content of the developer in the intermediate layer is, for example, less than 0.05 part by mass, preferably less than 0.02 part by mass, more preferably less than 0.01 part by mass, further preferably less than 0.005 part by mass, and particularly preferably 0 part by mass, per 100 parts by mass of the resin.

The laminate is preferably produced in such a manner that the intermediate layer does not contain one or both of the coloring agent and the developer, but one or both of the coloring agent and the developer may migrate from any of the color developing layers (A), (B), and (C) to the intermediate layer at room temperature in the case of heating through laser irradiation or the like, or in the case of using a resin having a low glass transition temperature, such as a polyethylene resin. In this case, the content of one or both of the coloring agent and the developer in the intermediate layer is, for example 3 parts by mass or less, preferably 2 parts by mass or less, more preferably 1.5 parts by mass or less, further preferably 1 part by mass or less, still further preferably 0.75 part by mass or less, still more further preferably 0.5 part by mass or less, and even further preferably 0.4 part by mass or less, per 100 parts by mass of the resin. The lower limit thereof may be 0.01 part by mass, may be 0.05 part by mass, may be 0.1 part by mass, and may be 0.2 part by mass.

The intermediate layer may appropriately contain additives other than the coloring agent and the developer. The additives other than the coloring agent and the developer used in the intermediate layer are the same as the additives used in the color developing layer, and the details thereof have been described above.

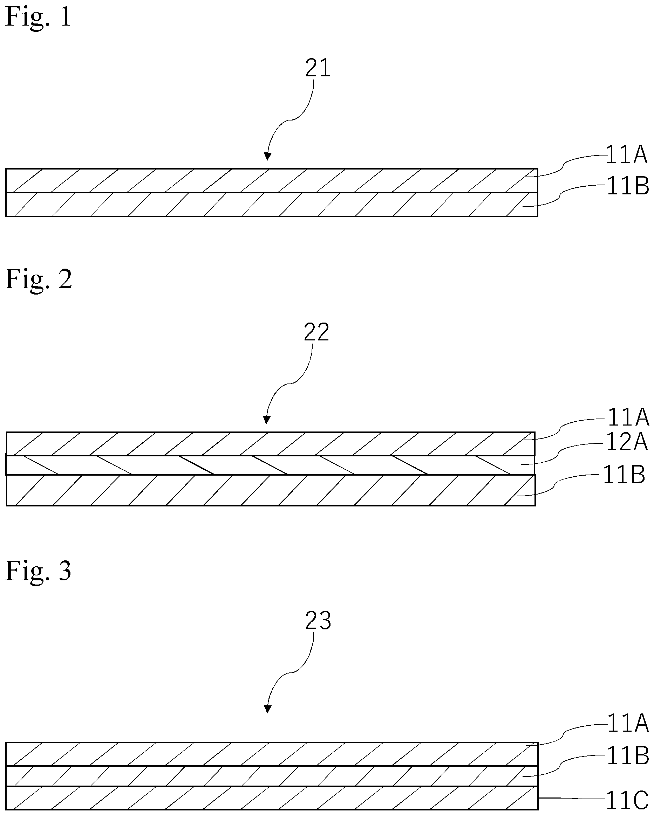

Figs. 1 to 4 show specific layer configurations of the laminate. Fig. 1 shows a laminate 21 including two color developing layers 11A and 11B, and having a layer configuration in which the two color developing layers are directly laminated. In the laminate 21 shown in Fig. 1, it is preferred that the two color developing layers 11A and 11B develop different colors from each other, and it is preferred that the color developed by the color developing layer 11A is one selected from a cyan color, a magenta color, and a yellow color, and the color developed by the color developing layer 11B is another one selected from a cyan color, a magenta color, and a yellow color.

The laminate including the two color developing layers 11A and 11B may be a laminate 22 further including the intermediate layer 12A between the two color developing layers 11A and 11B as shown in Fig. 2.

The laminates 21 and 22 can develop two colors, and can develop various colors with various designs by appropriately selecting the color developing layer to be allowed to develop color and the region where color is developed (i.e., the position on the x-y plane described later).

Fig. 3 shows a laminate 23 including three color developing layers 11A, 11B, and 11C, having a layer configuration in which pairs of the two color developing layers adjacent to each other are directly laminated. In the laminate 23 shown in Fig. 3, it is preferred that the three color developing layers 11A, 11B, and 11C develop different colors from each other, and it is preferred that the color developed by the color developing layer 11A is one selected from a cyan color, a magenta color, and a yellow color, the color developed by the color developing layer 11B is another one selected from a cyan color, a magenta color, and a yellow color, and the color developed by the color developing layer 11C is the remaining one selected from a cyan color, a magenta color, and a yellow color.

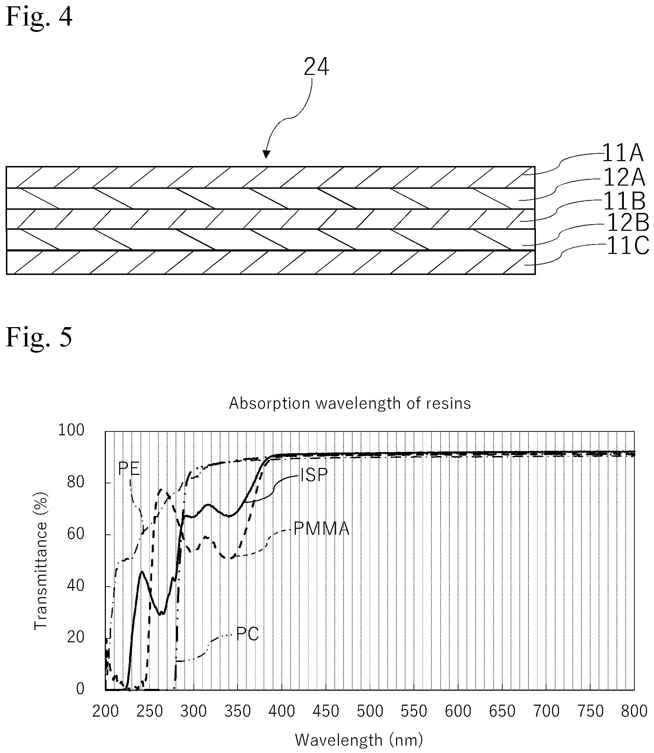

The laminate including the three color developing layers 11A, 11B, and 11C may be a laminate 24 further including an intermediate layer 12A between a pair of the adjacent two color developing layers 11A and 11B and an intermediate layer 12B between a pair of the adjacent two color developing layers 11B and 11C as shown in Fig. 4.

The laminates 23 and 24 can develop three colors, and can develop full color with various designs by appropriately selecting the layer to be allowed to develop color and the region where color is developed.

It is possible that the laminate including the three color developing layers 11A, 11B, and 11C has an intermediate layer provided between one of the pairs of the adjacent two color developing layers (for example, between the color developing layers 11A and 11B), and does not have an intermediate layer provided between another one of the pairs of the adjacent two color developing layers (for example, between the color developing layers 11B and 11C).

The number of color developing layers in the laminate is not limited to two or three layers, and may be four or more layers. The four or more color developing layers may develop different colors from each other. For example, in the case where the color developing layers include four layers, it is possible that three layers of the four layers develop a cyan color, a magenta color, and a yellow color, respectively, and the remaining one layer develops a color other than a cyan color, a magenta color, and a yellow color (for example, a black color or a gray color).

The laminate may have two or more color developing layers that develop the same color, as long as including at least two layers develop different colors from each other. For example, in the case including four layers, it is possible that the laminate includes a layer developing a cyan color, a layer developing a magenta color, and a layer developing a yellow color, at least one layer of which includes two or more layers.

**In** the case where the laminate includes four or more color developing layers provided therein, an intermediate layer may be provided between one pair of the color developing layers adjacent to each other, or an intermediate layer may not be provided therebetween. **In** the case where an intermediate layer is provided, as similar to the case where three color developing layers are provided, an intermediate layer may be provided between all each of pairs of the color developing layers adjacent to each other, or an intermediate layer may be provided between a part of pairs of the color developing layers adjacent to each other.

### [Thickness]

**In** the present invention, the thickness of the color developing layer may be, for example, 4 µm or more. **In** the case where the thickness of the color developing layer is 4 µm or more, one of the color developing layers can be easily selectively allowed to develop color through laser irradiation among the multiple color developing layers laminated. The thickness of each of the color developing layers is preferably more than 5 µm, more preferably 10 µm or more, further preferably more than 20 µm, still further preferably 35 µm or more, and most preferably 50 µm or more, from the standpoint facilitating the selective color development of one of the color developing layers.

The thicknesses of the multiple color developing layers provided in the laminate may be the same as or different from each other.

As for the thicknesses of the color developing layers, it suffices that one color developing layer of the multiple color developing layers provided in the laminate has the lower limit value or more (or more than the lower limit value), and it is preferred that all the multiple color developing layers each have the lower limit value or more (or more than the lower limit value). **In** the case where all of the color developing layers has a thickness of the lower limit value or more or more than the lower limit value, all of the color developing layers can be easily allowed to develop color selectively. **In** the case where the thicknesses of the color developing layers are larger than the certain value, the laminate can be easily obtained through lamination molding or extrusion molding. In addition, the thickness that is equal to or larger than the certain value is preferred from the standpoint, for example, that the storge stability is improved, the clearness of the printed part is prevented from being impaired, and the deterioration of the security (reliability) due to scraping the printed part is prevented from occurring.

The thickness of the color developing layer is preferably 320 µm or less, more preferably 200 µm or less, further preferably 170 µm or less, still further preferably 150 µm or less, and particularly preferably 130 µm or less. In the case where the thickness of the color developing layer is the upper limit value or less, the color developability can be improved without excessively increasing the thickness of the laminate. As for the thicknesses of the color developing layers, it suffices that one color developing layer of the multiple color developing layers provided in the laminate has the upper limit value or less, and it is preferred that all the multiple color developing layers each have the upper limit value or less.

In the case where the intermediate layer is provided, the thickness of the intermediate layer is not particularly limited, and is preferably 1 µm or more and 200 µm or less. In the case where the thickness of the intermediate layer is in the range, one layer of the multiple color developing layers can be easily allowed to develop color selectively through laser irradiation without excessively increasing the thickness of the laminate. Furthermore, the coloring agent and the developer in the color developing layer can be easily prevented from migrating to the other color developing layers.

From the standpoint, the thickness of the intermediate layer is more preferably 5 µm or more and 150 µm or less, further preferably 10 µm or more and 100 µm or less, and particularly preferably 15 µm or more and 80 µm or less.

The total thickness of the laminate is not particularly limited, and is preferably 10 µm or more and 2,000 µm or less, more preferably 20 µm or more and 1,500 µm or less, further preferably 45 µm or more and 1,200 µm or less, still further preferably 50 µm or more and 1,000 µm or less, particularly preferably 80 µm or more and 900 µm or less, and still particularly preferably 100 µm or more and 800 µm or less, from the standpoint of securing the thicknesses of the color developing layers without excessively increasing the thickness thereof.

### [Area of Laminate]

The size of the laminate may vary depending on the purpose, and for example, in the case where the laminate is used in a passport, the area of the laminate is preferably 400 cm² or less, more preferably 350 cm² or less, further preferably 300 cm² or less, still further preferably 250 cm² or less, still more further preferably 200 cm² or less, and particularly preferably 150 cm² or less, and is preferably 50 cm² or more, more preferably 65 cm² or more, and further preferably 80 cm² or more.

For example, in the case where the laminate is used in a passport, the shape thereof is preferably a quadrilateral, such as a rectangle, and the length of one edge thereof is preferably 20 cm or less, more preferably 18 cm or less, further preferably 16 cm or less, and particularly preferably 14 cm or less, and is preferably 8 cm or more, more preferably 10 cm or more, and further preferably 11 cm or more. The length of the other edge thereof is preferably 15 cm or less, more preferably 13 cm or less, further preferably 11 cm or less, and still further preferably 10 cm or less, and is preferably 6 cm or more, more preferably 7 cm or more, and further preferably 8 cm or more. In the case where the laminate has such size and shape, the laminate can be favorably used in a passport, further in an electronic passport, and particularly in a data page thereof.

For example, the case where the laminate is used in a card, the area of the laminate is preferably 200 cm² or less, more preferably 150 cm² or less, further preferably 100 cm² or less, still further preferably 80 cm² or less, and particularly preferably 60 cm² or less, and is preferably 20 cm² or more, and more preferably 30 cm² or more.

The shape thereof preferably a quadrilateral, such as a rectangle, and the length of one edge thereof is preferably 17 cm or less, more preferably 15 cm or less, further preferably 13 cm or less, and still further preferably 11 cm or less, and is preferably 6 cm or more, and more preferably 7.5 cm or more.

The length of the other edge thereof is preferably 14 cm or less, more preferably 12 cm or less, further preferably 10 cm or less, and still further preferably 8 cm or less, and is preferably 4 cm or more, and more preferably 4.5 cm or more.

In the case where the laminate has such size and shape, the laminate can be favorably used in a card.

The laminate preferably has high transparency, and the total light transmittance according to JIS K7361-1:1997 thereof is preferably 84% or more, more preferably 86% or more, further preferably 88% or more, still further preferably 90% or more, particularly preferably more than 91%, and most preferably 92% or more. With the increased transparency of the laminate, the contrast between the marked region and the other regions can be increased. Furthermore, the developed color of each of the color developing layers can be easily visually recognized from the outside, and the mixed color formed through color development of two color developing layers can also be easily visually recognized.

The laminate is preferably colorless or nearly colorless before irradiation with laser light. **In** the case where the laminate is colorless or nearly colorless, the laminate can be favorably used as a laser marking sheet for various applications such as a card and a passport.

Therefore, the absolute values of a* and b* of each of the color developing layer in the laminate are preferably as small as possible, and specifically the absolute values of a* and b* each are, for example, 20 or less, preferably 15 or less, more preferably 10 or less, further preferably 5 or less, and still further preferably 4 or less. The absolute values of a* and b* each are preferably as small as possible, and may be 0 or more.

The color developing layers each may exhibit excellent color developability through irradiation of laser light. Therefore, it is preferred that at least any of a* and b* of each of the color developing layers after irradiation of laser light has a large difference from a* and b* before the laser light irradiation. Specifically, at least any of the absolute value of the difference of a* and the absolute value of the difference of b* between before irradiation and after irradiation of laser light is preferably 1.5 or more, more preferably 4 or more, further preferably 7 or more, still further preferably 12 or more, and still more further preferably 20 or more. The upper limit of the absolute value of the difference of a* and the absolute value of the difference of b* between before irradiation and after irradiation of laser light is not particularly limited, and for example, may be 80 or less, may be 70 or less, and may be 60 or less.

It is preferred that as described above, the color developing layers each develop color through irradiation of laser light, and exhibit high contrast after printing. Therefore, the color difference ΔE of each of the color developing layers between before irradiation and after irradiation of laser light is preferably large, and is preferably 3 or more, more preferably 5 or more, further preferably 7 or more, still further preferably 10 or more, still more further preferably 15 or more, even further preferably 20 or more, and even more further preferably 23 or more. The upper limit of ΔE is not particularly limited, and for example, may be 100 or less, may be 90 or less, may be 80 or less, and may be 60 or less.

**In** each of the color developing layers, the difference in light transmittance (ΔT) between before irradiation and after irradiation of laser light at the absorption peak wavelength derived from the coloring agent in the light transmission spectrum is preferably a certain value or more. **In** the case where ΔT is a certain value or more at the absorption peak wavelength, the coloring agent can properly develop color, such as a cyan color, a magenta color, and a yellow color.

For example, at any of a wavelength, for example, of 430 nm for the case where a coloring agent developing a yellow color is contained, a wavelength, for example, of 540 nm for the case where a coloring agent developing a magenta color is contained, and a wavelength of 600 nm for the case where a coloring agent developing a cyan color is contained, ΔT is preferably 4% or more, more preferably 10% or more, further preferably 14% or more, still further preferably 20% or more, still more further preferably 25% or more, and even further preferably 30% or more. The upper limit of the above ΔT may be, for example, 80%, may be 70%, or may be 60%.

**In** each of the color developing layers, the transmittance (T) at the absorption peak wavelength derived from the coloring agent in the light transmission spectrum (or the wavelength providing the difference in transmittance (ΔT) of a certain value or more, which is for example, of 430 nm for the case where a coloring agent developing a yellow color is contained, for example, of 540 nm for the case where a coloring agent developing a magenta color is contained, or for example, 600 nm for the case where a coloring agent developing a cyan color is contained) is preferably high, and specifically is preferably 60% or more, more preferably 65% or more, further preferably 70% or more, still further preferably 75% or more, and still more further preferably 80% or more. **In** the case where the color developing layers each have a large transmittance at the wavelength providing the difference in transmittance (ΔT) of a certain value or more, the contrast between the part where color is developed and the other parts can be increased. The development of the colors of the color developing layers can be easily visually recognized from the outside, and the mixed color formed through color development of two color developing layers can also be easily visually recognized. The transmittance (T) is preferably as high as possible, which may be 100% or less, and is practically 99% or less, and may be 96% or less.

The irradiation of laser light in measuring the absolute value of the difference of a*, the absolute value of the difference of b*, ΔE, and ΔT may be performed according to the condition described in the examples shown below, and the wavelength of the laser light may be appropriately changed corresponding to the kinds of the coloring agent and the developer used for improving the color developability.

In at least one layer of the color developing layers, it is preferred that a resin composition excluding the coloring agent (in the description herein, a resin composition excluding the coloring agent in each of the color developing layers may be referred to as a resin composition (X)) has an absorption peak of the light transmission spectrum around the wavelength of the laser light to be radiated, and it is more preferred that the resin compositions (X) of the color developing layers each have an absorption peak of the light transmission spectrum around the wavelength of the laser light to be radiated. Specifically, it is more preferred that the resin composition (X) has an absorption peak in a wavelength range of (λ-120) nm or more and (λ+120) nm or less, in which λ nm represents a wavelength of laser light to be radiated.

Similarly, in at least one layer of the color developing layers, it is more preferred that a resin composition excluding the coloring agent and the developer (in the description herein, a resin composition excluding the coloring agent and the developer in each of the color developing layers may be referred to as a resin composition (Y)) has an absorption peak in a wavelength range of (λ-120) nm or more and (λ+120) nm or less, and it is more preferred that the resin compositions (Y) of the color developing layers included in the laminate each have an absorption peak in a wavelength range of (λ-120) nm or more and (λ+120) nm or less.

The above-mentioned wavelength range is further preferably (λ-90) nm or more and (λ+90) nm or less, still further preferably (λ-60) nm or more and (λ+60) nm or less, still more further preferably (λ-40) nm or more and (λ+40) nm or less, and even further preferably (λ-20) nm or more and (λ+20) nm or less. In the case where the color developing layer excluding the coloring agent or excluding the coloring agent and the developer has an absorption peak in the wavelength range above, color development with a sufficient density can be obtained through laser irradiation, to enable marking of clear letters, images, and the like. Furthermore, multiple colors can be easily developed with irradiation of laser light having one prescribed wavelength, and the configuration of the apparatus for laser marking the laminate can be simplified.

For example, in the case where the wavelength of laser light to be radiated is 355 nm, the resin composition (X) or the resin composition (Y) of the color developing layer preferably has an absorption peak in a wavelength range of 235 nm or more and 475 nm or less, more preferably has an absorption peak in a wavelength range of 265 nm or more and 445 nm or less, further preferably has an absorption peak in a wavelength range of 295 nm or more and 415 nm or less, still further preferably has an absorption peak in a wavelength range of 315 nm or more and 395 nm or less, and still more further preferably has an absorption peak in a wavelength range of 325 nm or more and 375 nm or less.

As described later, the wavelength of laser light to be radiated to the laminate for laser marking is preferably 200 nm or more and 1,500 nm or less, more preferably 250 nm or more and 1,200 nm or less, further preferably 300 nm or more and 900 nm or less, still further preferably in the visible light region or the ultraviolet ray region, i.e., less than 780 nm, still more further preferably 300 nm or more and 600 nm or less, even further preferably 320 nm or more and 500 nm or less, and even still further preferably 340 nm or more and 400 nm or less. From the standpoint of the wavelength of laser light to be radiated, the resin composition (X) or the resin composition (Y) preferably has an absorption peak in a wavelength range of 250 nm or more and 1,200 nm or less, further preferably 280 nm or more and 900 nm or less, still further preferably in the visible light region or the ultraviolet ray region, i.e., less than 780 nm, still more further preferably 300 nm or more and 600 nm or less, even further preferably 320 nm or more and 500 nm or less, even still further preferably 330 nm or more and 400 nm or less, and even still more further preferably 340 nm or more and 370 nm or less.

For making the resin composition (X) or the resin composition (Y) to be the color developing layer having an absorption peak in the desired wavelength range described above, it is possible to use a resin having an absorption peak in the desired wavelength range, or to blend an additive having an absorption peak in the desired wavelength range in the color developing layer. For example, in the case where the wavelength of laser light to be radiated is 355 nm, a resin having an absorption peak around 355 nm, for example in a wavelength range of 235 nm or more and 475 nm or less, may be used. The more preferred wavelength ranges are as shown above, and the preferred specific examples of the resin are also as shown above. In this case, an additive having an absorption peak around 355 nm, for example in a wavelength range of 235 nm or more and 475 nm or less, may be blended in the color developing layer, and the more preferred wavelength ranges are as shown above. Examples of such an additive include a compound having a conjugated structure, such as a benzene ring. More specifically, examples thereof include a compound having a conjugated structure, such as a benzene ring, among the thermal stabilizer, the antioxidant, the ultraviolet ray absorbent, the light stabilizer, and the like described above. An ultraviolet ray absorbent, a light stabilizer, a phenol based antioxidant, and the like are also effectively blended.

The present invention also provides the following laminate as a preferred embodiment. In the following description for the preferred embodiment, the differences from the laminate described above are mainly described, and the parts omitted from the description are the same as described above.

In a laminate according to one preferred embodiment of the present invention, it is preferred that the resin composition excluding the coloring agent (i.e., the resin composition (X)) in at least one layer of the multiple color developing layers has an absorption peak of a light transmission spectrum in a wavelength range of 235 nm or more and 475 nm or less, and it is more preferred that the resin composition (X) in each of the color developing layers in the laminate has an absorption peak of a light transmission spectrum in a wavelength range of 235 nm or more and 475 nm or less.

The laminate can develop color through irradiation of laser light as described above. The laser light used has any one wavelength in a range (wavelength range), for example, of 200 nm or more and 1,500 nm or less as described above, and in the present embodiment, the wavelength of the laser light is preferably in the visible light region or the ultraviolet ray region from the standpoint of facilitating the color development with large energy of laser light, and being suitable for the inner marking. Accordingly, the wavelength of the laser light is, for example, less than 780 nm, preferably 300 nm or more and 600 nm or less, more preferably 320 nm or more and 500 nm or less, and further preferably 340 nm or more and 400 nm or less.

Therefore, the resin composition (X) in the color developing layer eventually has an absorption peak around the light development wavelength of the laser light suitable for marking, specifically inner marking, by allowing to have an absorption peak in a wavelength range of 235 nm or more and 475 nm or less. Consequently, it is possible that in the irradiation of laser light, the components other than the coloring agent absorb the laser light, and the coloring agent properly develops color by using the absorbed energy, resulting in high color developability.

While the color developing layer may contain a developer in some cases, in the case where the developer is contained, it is preferred that components other than the coloring agent and the developer each have an absorption peak in the prescribed wavelength range described above. Specifically, in the laminate according to the present embodiment, it is preferred that the resin composition excluding the coloring agent and the developer (i.e., the resin composition (Y)) in at least one layer of the multiple color developing layers has an absorption peak of a light transmission spectrum in a wavelength range of 235 nm or more and 475 nm or less, and it is more preferred that the resin composition (Y) in each of the color developing layers has an absorption peak of a light transmission spectrum in a wavelength range of 235 nm or more and 475 nm or less. The configuration can further facilitate the enhancement of the color developability of the color developing layer.

The absorption peak of the resin composition (X) or the resin composition (Y) in the color developing layer is preferably 265 nm or more and 445 nm or less, more preferably 295 nm or more and 415 nm or less, and further preferably 315 nm or more and 395 nm or less.

The light transmission spectrum can be obtained by measuring with a spectrophotometer in a wavelength range of 200 to 800 nm, and the light transmission spectrum of the resin composition (X) can be obtained in such a manner that the components other than the coloring agent constituting the color developing layer are uniformly mixed, and formed into a film having the same thickness as the color developing layer, and the resulting film is measured for the light transmission spectrum. The light transmission spectrum of the resin composition (Y) can be measured in the similar manner.

In the present embodiment, it is preferred that the resin composition (X) in at least one layer of the color developing layers has an absorption peak in a wavelength range of (λ-120) nm or more and (λ+120) nm or less, in which λ nm represents the wavelength of the laser light used in the laser irradiation, and it is more preferred that the resin compositions (X) in the color developing layers contained in the laminate each have an absorption peak in a wavelength range of (λ-120) nm or more and (λ+120) nm or less.

Similarly, it is preferred that the resin composition (Y) in at least one layer of the color developing layers has an absorption peak in a wavelength range of (λ-120) nm or more and (λ+120) nm or less, in which and it is more preferred that the resin compositions (Y) in the color developing layers contained in the laminate each have an absorption peak in a wavelength range of (λ-120) nm or more and (λ+120) nm or less.

The above-mentioned wavelength range is more preferably (λ-90) nm or more and (λ+90) nm or less, further preferably (λ-60) nm or more and (λ+60) nm or less, still further preferably (λ-40) nm or more and (λ+40) nm or less, and still more further preferably (λ-20) nm or more and (λ+20) nm or less. In the case where the color developing layer excluding the coloring agent or excluding the coloring agent and the developer has an absorption peak in the wavelength range, color development with a sufficient density can be obtained through laser irradiation, to facilitate marking of clear letters, images, and the like. Furthermore, in the case where the color developing layers in the laminate excluding the coloring agent or excluding the coloring agent and the developer each have an absorption peak, multiple colors can be easily developed with irradiation of laser light having one prescribed wavelength, and the configuration of the apparatus for laser marking the laminate can be simplified.

In the present embodiment, as described above, it is preferred that the resin composition (X) or the resin composition (Y) used is a resin having an absorption peak in a wavelength range of 235 nm or more and 475 nm or less for providing the color developing layer having a light transmission spectrum absorption peak in a wavelength range of 235 nm or more and 475 nm or less.

Therefore, it is preferred that the resin in at least one layer of the color developing layers is a resin having an absorption peak in a wavelength range of 235 nm or more and 475 nm or less, and it is more preferred that the resins in the color developing layers in the laminate each have an absorption peak in a wavelength range of 235 nm or more and 475 nm or less.

The resin having an absorption peak in a wavelength range of 235 nm or more and 475 nm or less described above more preferably has an absorption peak in a wavelength range of 265 nm or more and 445 nm or less, and further preferably has an absorption peak in a wavelength range of 295 nm or more and 415 nm or less, in which a resin having an absorption peak in a wavelength range of 315 nm or more and 395 nm or less is still further preferred, and the resin having an absorption peak in a wavelength range of 325 nm or more and 375 nm or less is still more further preferred.

Examples of such a resin include, among the above, an acrylic resin, such as a poly(methacrylic acid ester) resin, e.g., polymethyl methacrylate, poly(acrylic acid ester) resin, a polysodium acrylate resin, and a polyacrylonitrile resin, a polycarbonate resin containing a structural unit derived from a dihydroxy compound having a moiety represented by the formula (1) in a part of the structure, and polyimide resin.

The polycarbonate resin containing a structural unit derived from a dihydroxy compound having a moiety represented by the formula (1) in a part of the structure can easily secure the transparency of the color developing layer, and therefore can provide color development with a sufficient density through laser irradiation, to enable marking of clear letters, images, and the like. Furthermore, a laminate for laser marking can be obtained that is excellent in surface hardness, heat resistance, and weather resistance, and in which a resin material derived from plant is used, resulting in a laminate having a high biomass ratio. Moreover, the glass transition temperature thereof can be relatively low, which lowers the processing temperature, and thus a coloring agent and a developer having insufficient heat resistance can be used, resulting in the enhancement of the usable components.

The acrylic resin also can easily secure the transparency of the color developing layer, and therefore can provide favorable color development through laser irradiation, to enable marking of clear letters, images, and the like. Furthermore, the glass transition temperature thereof can be relatively low, which lowers the processing temperature, and thus a coloring agent and a developer having insufficient heat resistance can be used, resulting in the enhancement of the usable components. In addition, the good low temperature fusibility thereof improves the processability in producing the laminate, and the processability in adhering the laminate to another film.

Among the above, the polycarbonate resin containing a structural unit derived from a dihydroxy compound having a moiety represented by the formula (1) in a part of the structure is preferred from the standpoint of the transparency, the heat resistance, the impact resistance, the chemical resistance, the plant origin, and the like.

It is preferred that the resin in at least one layer of the color developing layers is a resin having an absorption peak of the light transmission spectrum around the wavelength of the laser light to be radiated, and it is more preferred that the resins in the color developing layers in the laminate each are resin having an absorption peak of the light transmission spectrum around the wavelength of the laser light to be radiated. Specifically, a resin having an absorption peak in a wavelength range of (λ-120) nm or more and (λ+120) nm or less, in which λ nm represents the wavelength of the laser light used in the laser irradiation, is preferred. The wavelength range is more preferably (λ-90) nm or more and (λ+90) nm or less, further preferably (λ-60) nm or more and (λ+60) nm or less, still further preferably (λ-40) nm or more and (λ+40) nm or less, and still more further preferably (λ-20) nm or more and (λ+20) nm or less. In the case where the resin having an absorption peak in the above wavelength range is used, color development with a sufficient density can be obtained through laser irradiation, to facilitate marking of clear letters, images, and the like. Furthermore, multiple colors can be easily developed with irradiation of laser light having one prescribed wavelength, and the configuration of the apparatus for laser marking the laminate can be simplified.

**In** each of the color developing layers, the transmittance of the resin at the wavelength of laser light to be radiated is not particularly limited, and is preferably 85% or less, more preferably 80% or less, further preferably 76% or less, and still further preferably 73% or less. **In** the case where the transmittance of the resin at the wavelength of laser light is lower, the color developing layers can easily develop color through generation of energy or heat by absorbing the radiated laser, to facilitate marking of clear letters, images, and the like. The transmittance of the resin at the wavelength of laser light to be radiated is, for example, 30% or more, preferably 40% or more, and more preferably 50% or more, while not particularly limited.

The color developing layers each contain the coloring agent, preferably contain the developer, and may further optionally contain the photothermal conversion agent, the sensitizer, the compound (X), and the additional additives, the details of which are described above. **In** the present embodiment, however, the developer preferably has an absorption peak of the light transmission spectrum in the wavelength range around the absorption peak of the resin composition (X) or the resin composition (Y) of the color developing layer described above. According to the configuration, the developer and the coloring agent can be easily reacted through irradiation of laser light having a light wavelength around the absorption peak of the resin composition (X) or the resin composition (Y), color development with sufficient density is obtained, to further facilitate marking of clear letters, images, and the like.

Accordingly, the developer used in the color developing layer having the resin composition (X) or the resin composition (Y) having an absorption peak of the light transmission spectrum in a wavelength range of 235 nm or more and 475 nm or less as described above is preferably a developer having an absorption peak in a wavelength range of 235 nm or more and 475 nm or less, more preferably a developer having an absorption peak in a wavelength range of 265 nm or more and 445 nm or less, further preferably a developer having an absorption peak in a wavelength range of 295 nm or more and 415 nm or less, still further preferably a developer having an absorption peak in a wavelength range of 315 nm or more and 395 nm or less, and still further preferably a developer having an absorption peak in a wavelength range of 325 nm or more and 375 nm or less.

The developer is also preferably a developer having an absorption peak of the light transmission spectrum around the wavelength range of the laser light to be radiated, the details of which are as described above.

In the present embodiment, an additive having an absorption peak in a wavelength range of 235 nm or more and 475 nm or less may be blended in the color developing layer for providing the color developing layer having the resin composition (X) or the resin composition (Y) having an absorption peak of the light transmission spectrum in a wavelength range of 235 nm or more and 475 nm or less.

Accordingly, the color developing layer in at least one layer of the multiple color developing layers may contain an additive having an absorption peak in a wavelength range of 235 nm or more and 475 nm or less in the light transmission spectrum, and the color developing layers in the laminate each may contain an additive having an absorption peak in a wavelength range of 235 nm or more and 475 nm or less.

The additive having an absorption peak in a wavelength range of 235 nm or more and 475 nm or less described above preferably has an absorption peak in a wavelength range of 265 nm or more and 445 nm or less, more preferably has an absorption peak in a wavelength range of 295 nm or more and 415 nm or less, further preferably has an absorption peak in a wavelength range of 315 nm or more and 395 nm or less, and still further preferably has an absorption peak in a wavelength range of 325 nm or more and 375 nm or less.

Examples of such an additive include a compound having a conjugated structure, such as a benzene ring. More specifically, compounds having a conjugated structure among the thermal stabilizer, the antioxidant, the ultraviolet ray absorbent, the light stabilizer, and the like, which are described above, are exemplified. An ultraviolet ray absorbent, a light stabilizer, a phenol based antioxidant, and the like are also effectively blended. Among these, an ultraviolet ray absorbent is preferred. Specifically, the ultraviolet ray absorbents described above can be used, in which benzotriazole based, benzophenone based, triazine based, and benzoxazinone based ultraviolet ray absorbents are preferred, and a benzotriazole based ultraviolet ray absorbent is more preferred.

The color developing layer may have an absorption peak of the light transmission spectrum in a wavelength range of 235 nm or more and 475 nm or less by containing both the additive having an absorption peak in a wavelength range of 235 nm or more and 475 nm or less and the resin having an absorption peak in a wavelength range of 235 nm or more and 475 nm or less.

In the case where the laminate includes multiple color developing layers each having an absorption peak in a wavelength range of 235 nm or more and 475 nm or less, the color developing layers may have an absorption peak in a wavelength range of 235 nm or more and 475 nm or less with the same component, or may have an absorption peak in a wavelength range of 235 nm or more and 475 nm or less with different components. For example, it is possible that a part of the color developing layers has an absorption peak in a wavelength range of 235 nm or more and 475 nm or less by containing the additive having an absorption peak in a wavelength range of 235 nm or more and 475 nm or less, and the other color developing layer has an absorption peak in a wavelength range of 235 nm or more and 475 nm or less by containing the resin having an absorption peak in a wavelength range of 235 nm or more and 475 nm or less.

The present invention further provides the following laminate as another preferred embodiment. In the following description for the other preferred embodiment, the differences from the laminate described above are mainly described, and the parts omitted from the description are the same as described above.

A laminate according to another preferred embodiment of the present invention is characterized in that the resin in at least one layer of the multiple color developing layers contains a polycarbonate resin containing a structural unit derived from a dihydroxy compound having a moiety represented by the formula (1) in a part of the structure.

In the present embodiment, the color developing layer contains the polycarbonate resin having the particular structure, and thereby can have an absorption peak in a low wavelength range (for example, a wavelength range of 235 nm or more and 475 nm or less), enabling color development with high color developability through irradiation of laser light. Furthermore, the transparency of the color developing layer can be easily secured. Accordingly, color development with a sufficient density can be obtained through laser irradiation, to enable marking of clear letters, images, and the like. Moreover, a laminate in which a resin material derived from plants is used can be provided, and a laminate having a high biomass ratio can be provided.

The glass transition temperature thereof can be relatively low, which lowers the processing temperature, and thus a coloring agent and a developer having insufficient heat resistance can be used, resulting in the enhancement of the usable components. Furthermore, for example, in the production of a card or a passport by fusing multiple sheets for a card under heating, the sheets can be fused under heating at a low temperature, resulting in good low temperature fusibility.

In addition, the solvent resistance can also be improved. For example, in working into a product, such as a card or a passport, an adhesive is used in the case where the heat fusibility to another sheet is poor, or an ink is brought into contact therewith in the case where an image receiving layer as used in printing a photograph of face is provided, or design or security printing is performed thereon. In these cases, while insufficient solvent resistance may cause defects, such as cracks or whitening occurring due to penetration of the solvent, the defects can be prevented from occurring. Furthermore, the storage stability of the printed part and the laser printed part can also be improved.

Furthermore, the scratch resistance can also be improved. For example, a card, a passport, and the like can easily resist long-term use. The solvent resistance, the scratch resistance, and the like can be improved in a well balanced manner.

In the present embodiment, the polycarbonate resin used in each of the color developing layers in the laminate is preferably the polycarbonate resin containing a structural unit derived from a dihydroxy compound having a moiety represented by the formula (1) in a part of the structure, and thereby all the color developing layers in the laminate can have high color developability. Furthermore, the transparency of the entire laminate can be easily secured, to enable marking of clear and multiply-colored letters, images, and the like.

In each of the color developing layers, the polycarbonate resin containing a structural unit derived from a dihydroxy compound having a moiety represented by the formula (1) in a part of the structure preferably constitutes a major component. Specifically, the color developing layers each contain the polycarbonate resin containing a structural unit derived from a dihydroxy compound having a moiety represented by the formula (1) in a part of the structure in an amount of 50% by mass or more and 100% by mass or less, more preferably 70% by mass or more and 100% by mass or less, and further preferably 90% by mass or more and 100% by mass or less on the basis of a total amount of the resin contained in each of the color developing layers, and it is most preferred that the resin in each of the color developing layers consists of the polycarbonate resin containing a structural unit derived from a dihydroxy compound having a moiety represented by the formula (1) in a part of the structure.

The laminate according to the present embodiment is the same as described above except that the particular polycarbonate resin is used in the color developing layer, and the detailed description thereof is omitted therein. However, in the laminate according to the present embodiment, at least one layer of the multiple color developing layers existing in the laminate preferably has an absorption peak of the light transmission spectrum in a wavelength range of 235 nm or more and 475 nm or less, but it is not necessary to have an absorption peak of the light transmission spectrum in a wavelength range of 235 nm or more and 475 nm or less.

### <Production Method of Laminate>

A production method of the laminate according to the embodiments described above is not particularly limited, and may be a known method, and an example in the case where the resins constituting the color developing layers each are thermoplastic resin, and the color developing layers each contain a coloring agent is described below.

The laminate of the present invention may be produced, for example, in such a manner that the components constituting each of the color developing layer are melt-kneaded to produce at least two resin compositions for forming the color developing layers, and the color developing layers formed with the resin compositions are laminated by the extrusion method or the lamination method.

Specifically, the components constituting each of the color developing layers (for example, the resin and the coloring agent, and also the components optionally blended (such as the developer)) may be melt-kneaded with an extruder or a kneader, such as Plastomill, so as to provide the resin compositions for forming each of the color developing layers.

Subsequently, for example, the resulting resin compositions each may be formed into a film, and a plurality of the color developing layers in the form of a film may be laminated to provide the laminate. The method of forming the resin composition into a film is not particularly limited, and may be press molding or extrusion molding, and extrusion molding is preferred from the standpoint of the productivity and the cost. The method of laminating the plurality of the color developing layers in the form of a film is not particularly limited, and the plurality of the color developing layers in the form of a film produced in advance may be laminated by a known lamination method.

In the lamination method, the plurality of the color developing layers may be laminated by passing between one pair of rolls while conveying by the roll-to-roll process, or the plurality of the color developing layers may be laminated by pressing with a pressing machine. The pressing may be pressure pressing or vacuum heat pressing, and vacuum heat pressing is preferred.

The extrusion method may also be used as described above, and in this case, on the color developing layer molded into a film, the resin composition for forming another color developing layer may be extrusion-molded, so as to laminate the plurality of the color developing layers.

The extrusion method may be a co-extrusion method. Specifically, it is possible that the resin compositions for forming the color developing layers each are obtained in the same manner as above, and the plurality of the color developing layers are laminated by melt coextruding the resin compositions by the feed block method, a multiple manifold method, or the like, so as to provide the laminate.

The laminate is preferably produced by using melt co-extrusion among the above from the standpoint of the productivity and the cost.

In the production method, the color developing layers may be directly laminated to provide the laminate, or the intermediate layer may be laminated between one pair of the color developing layers to provide the laminate having the intermediate layer. **In** the case where the intermediate layer is laminated, it is possible that a resin composition constituting the intermediate layer is provided, and the intermediate layer is laminated with the resin composition by the similar method as the color developing layer, such as the lamination method or the extrusion method.

In the production method, during the sequence of the process steps including kneading the components to provide the resin compositions, and providing the color developing layers and then the laminate from the resin compositions, the kneading temperature and the heating temperature of the resin composition are preferably regulated to less than the crystalline melting temperature of the developer. By regulating the heating temperature in this manner, the color developing layers can be prevented from developing color in the production process. The regulation of temperature in this manner is effective in the case where the crystalline melting temperature of the developer is higher than the crystalline melting temperature of the coloring agent.

In the case where the crystalline melting temperature of the developer is the crystalline melting temperature of the coloring agent or less, on the other hand, the kneading temperature and the heating temperature of the resin composition in the sequence of steps described above are preferably regulated to less than the crystalline melting temperature of the coloring agent.

The temperature at which the components for providing the resin composition are kneaded (i.e., the kneading temperature) is preferably such a temperature that can enhance the dispersibility of the coloring agent blended but does not allow the coloring agent to develop color, and for example, is preferably the crystalline melting temperature of the coloring agent blended or more. In the case where the developer is blended, as described above, the kneading temperature is preferably less than the crystalline melting temperature of the developer. **In** the case where the kneading temperature is the crystalline melting temperature of the coloring agent or more and less than the crystalline melting temperature of the developer in such a manner, the coloring agent can enhance the dispersibility of the coloring agent and can be prevented from reacting with the developer and developing color in kneading.

However, in the case where the crystalline melting temperature of the coloring agent is higher than the crystalline melting temperature of the developer, the components may be kneaded at a temperature that is less than the crystalline melting temperature of the coloring agent and is the crystalline melting temperature of the developer or more.

The kneading temperature may be heated to a temperature that is higher than the glass transition temperature of the resin constituting each of the color developing layers, and in the case where the resin is a crystalline resin, the kneading temperature is preferably heated to around the crystalline melting temperature of the resin, and preferably to the crystalline melting temperature thereof or more.

The kneading temperature is appropriately regulated depending on the kinds of the resin, the coloring agent, and the developer used in the color developing layer, and is, for example, 130°C or more and 350°C or less, preferably 140°C or more and 300°C or less, more preferably 150°C or more and 270°C or less, and further preferably 175°C or more and 250°C or less. With the kneading temperature of the prescribed temperature or more, the components constituting the color developing layer can be properly mixed. With the kneading temperature of the prescribed temperature or less, the coloring agent can be prevented from erroneously developing color in the kneading.

The heating temperature in forming the color developing layer in the form of film through extrusion molding, press molding, or the like of the resulting resin composition, and the heating temperature in laminating the plurality of the color developing layers or the color developing layers and the intermediate layer are preferably such a temperature that does not allow the coloring agent blended in the color developing layer to develop color, and for example, may be regulated to the aforementioned temperature in the case where the developer is blended. The heating temperature is preferably a temperature that is higher than the glass transition temperature of the resin constituting each of the color developing layers, and in the case where the resin is a crystalline resin, is preferably around the crystalline melting temperature of the resin, and more preferably a temperature of the crystalline melting temperature or more.

Specifically, the heating temperature is, for example, 80°C or more and 350°C or less, or 90°C or more and 300°C or less, preferably 100°C or more and 270°C or less, more preferably 140°C or more and 270°C or less, and further preferably 150°C or more and 250°C or less. With the heating temperature that is the prescribed temperature or more, the color developing layer can be properly formed, and the color developing layers, or the color developing layers and the intermediate layer can be laminated and properly adhered to each other. With the heating temperature that is the prescribed temperature or less, the coloring agent can be prevented from erroneously developing color in forming or laminating the color developing layers.

### <Use Method of Laminate>

The laminate of the present invention preferably has laser color developability as described above, and therefore is preferably used as a laser marking sheet. In other words, the laminate is preferably laser marked through irradiation of laser.

In the laminate of the present invention, at least one of the color developing layer of the multiple color developing layers may be selectively allowed to develop color through so-called inner marking.

The inner marking herein is a method in which laser light is focused to the interior of the laminate, and the part to which the laser light is focused and the surrounding part are heated with the laser light, so as to allow the color developing layer to develop color. In the inner marking, at least one of the color developing layer of the multiple color developing layers can be selectively allowed to develop color by regulating the focus position of laser light (which may be referred to as a "penetration depth") along the lamination direction (z direction) of the laminate.

For example, in the case where the laminate includes, as the color developing layer, a layer developing a cyan color (which is conveniently referred to as a layer (A)), a layer developing a magenta color (which is conveniently referred to as a layer (B)), and a layer developing a yellow color (which is conveniently referred to as a layer (C)), for example, a cyan color can be developed by radiating laser light by directing the focus position to the layer (A), a magenta color can be developed by radiating laser light by directing the focus position to the layer (B), and a yellow color can be developed by radiating laser light by directing the focus position to the layer (C).

For example, two colors can be developed by radiating laser light by directing the focus position to any one of the color developing layers and by radiating laser light by directing the focus position to another one of the color developing layers. Three or more colors can be developed by performing the similar laser light irradiation repeatedly. In developing two or more colors, two or more colors can be mixed by radiating laser light at the same position on the x-y plane (i.e., the plane perpendicular to the lamination direction (z direction)) of the laminate.

The laser irradiation performed by directing the focus position to each of the color developing layers may be performed in such a manner that a plurality of laser modules that have been directed to the focus positions of the color developing layers respectively in advance are provided, and laser light is radiated from each of the laser modules to each of the color developing layers. Therefore, in the case where the laminate includes three color developing layers, three laser modules may be provided. The laser module generally includes a laser light source emitting laser light, and a condenser lens condensing the laser light to the color developing layer, and depending on necessity, may also include a mirror refracting the laser light, a laser modulator modulating the laser light, and the like.

In the case where a plurality of the laser modules are used as described above, the focus positions of the laser light radiated from the laser modules may not be adjusted, and the laser radiation can be easily controlled. The plurality of the laser modules may radiate laser light having the same light development wavelength or may radiate laser light having different light development wavelengths.

The laser module used may be, for example, a laser module capable of changing the focus position (penetration depth). The laser module of this type may change the focus position to direct the focus position to one layer of the multiple color developing layers, and may radiate laser light to the color developing layer. The color developing layers each can be irradiated with laser light by directing the focus position to each of the color developing layers, and thereby the multiple color developing layers can be selectively allowed to develop color with one laser module. As a result, the apparatus for laser marking can be simplified. The one laser module may radiate, for example, one kind of laser light having the same light wavelength.

The laser module capable of changing the focus position may include a laser light source and a condenser lens, and depending on necessity, may also include a mirror, a laser light modulator, and the like, as similar to the laser module described above. The laser light modulator herein may modulate light radiated from the laser light source, so as to regulate the focus position, the radiation position, and the like of the laser light, and a hologram may also be used therefor. The laser module capable of changing the focus position may also include a lens adjustment mechanism adjusting the focus position of the condenser lens, and the focus position may be adjusted with the lens adjustment mechanism.

The embodiment in which the focus position is directed to each of the color developing layers has been specifically described above, and in the case where one pair of the color developing layers adjacent to each other are allowed to develop color for mixing colors, the focus position may be directed to the interface between one pair of the color developing layers or the vicinity thereof (which may be the intermediate layer in the case where the intermediate layer intervenes between the two color developing layers adjacent to each other), and thereby two colors may be developed through one time of laser irradiation.

The laser light radiated from the laser module may be single wavelength laser or may be multiple wavelength laser, and is preferably single wavelength laser. The laser light radiated from the laser module preferably has any one wavelength in a range of 200 nm or more and 1,500 nm or less, more preferably in a range of 250 nm or more and 1,200 nm or less, and further preferably in a range of 300 nm or more and 900 nm or less. The wavelength range is preferably in the visible light region or the ultraviolet ray region from the standpoint of the suitability thereof for the inner marking, and therefore is preferably less than 780 nm. Accordingly, the laser light preferably has at least one wavelength of 250 nm or more and less than 780 nm, more preferably 300 nm or more and 600 nm or less, further preferably 320 nm or more and 500 nm or less, and still further preferably 340 nm or more and 400 nm or less.

The color developing layers of the laminate of the present invention each are capable of developing color through irradiation of laser light having one wavelength in a range of 200 nm or more and 1,500 nm or less in the preferred embodiment as described above, and therefore the color developing layers each can be properly allowed to develop color by using laser light having the wavelength described above.

Examples of the laser used include pulse laser and CW laser, and pulse laser is preferred from the standpoint of decreasing the thermal damage of the laminate. Examples of the pulse laser include microsecond laser, nanosecond laser, picosecond laser, and femtosecond laser, and femtosecond laser is preferred from the standpoint of the capability of causing the color developing layer having a small thickness to develop color with high selectivity.

The laminate of the present invention can be used in a passport and various cards, such as an IC card, a magnetic card, a driver license card, a residence card, a license card, an employee ID card, a student ID card, a personal ID number card, a seal registration card, a vehicle inspection certificate, a tag card, a prepaid card, a cash card, a bank card, a credit card, a SIM card, an ETC card, an identification card, an information carrying card, a smart card, a B-CAS card, and a memory card. In the various cards and passport, the laminate of the present invention may be used as a recording layer on which various information is printed. The laminate of the present invention may be used as a data page in the passport.

For example, the laminate of the present invention may be further laminated with another film, which may be fused and integrated through heat press molding, lamination molding, or the like, so as to form a laminated material for a passport or a card (which may be hereinafter referred to as a secondary molded article). The obtained secondary molded article may be punched out to a desired size, so as to provide a data sheet for a passport, particularly a data sheet for an electronic passport, or a card. The secondary molded article, preferably the part of the secondary molded article constituted by the laminate, is irradiated with laser light, thereby producing a passport, an electronic passport, or a card having personal names, symbols, letters, photographs, and the like marked thereon, and personal information and the like printed thereon.

Another film described above may be, for example, a resin film formed from a polycarbonate resin, a polyester resin, or the like. Examples of another film include a core sheet described later, a resin film for forming a protective layer, an inlet sheet, and a hinge sheet.

For example, the card includes the laminate of the present invention and may further include a core sheet, and the laminate of the present invention may be laminated on one surface or both surfaces of the core sheet. The card may include a protective layer, and the protective layer formed of a resin film may be further laminated on the surface of the laminate for protecting the laminate.

The core sheet is preferably a resin sheet in which a polycarbonate resin, a polyester resin, or the like is used as a resin material, and is also preferably a sheet that appropriately contains a colorant, such as a white pigment. The thickness of the core sheet is, for example, approximately 400 to 700 µm.

The passport (the data page of the passport), particularly the electronic passport may include the laminate and may also include a hinge sheet and core sheets provided on both surfaces of the hinge sheet, and the laminate of the present invention may be laminated on the surface of the core sheet. The passport may also include a sheet having a recording medium, such as an IC chip, having various information recorded therein, i.e., a so-called inlet sheet. The inlet sheet may be provided, for example, between the hinge sheet and the core sheet.

The hinge sheet is a sheet having a function of supporting the recording layer, the core sheet, the inlet sheet, and the like, and firmly binding the sheets integrally with the front cover, the visa sheet, and the like of the passport. Accordingly, a sheet having firm heat fusibility, appropriate flexibility, heat resistance in heat fusing process, and the like is preferably used.

The hinge sheet may be a known one, which may be a resin sheet constituted by a thermoplastic resin or a thermoplastic elastomer, may be constituted by a woven fabric, a knitted fabric, a nonwoven fabric, or the like, or may be a composite material of a woven fabric, a knitted fabric, or a nonwoven fabric with a thermoplastic resin or a thermoplastic elastomer. The core sheet for the passport is the same as described above except that the thickness thereof is preferably 50 to 200 µm.

### Examples

Examples and Comparative Examples are described below, but the present invention is not limited thereto.

The materials used in Examples and Comparative Examples are as follows. The light transmission spectra of the material resins are shown in Fig. 5.
PMMA: "ACRYPET MD001", available from Mitsubishi Chemical Corporation, polymethyl methacrylate resin, glass transition temperature: 101°C, MFR (temperature: 230°C, load: 3.8 kg): 6.0 g/10 min, density (A method, JIS K7112 (1999)): 1.19 g/cm³, haze (JIS K7136 (2000), thickness: 3 mm): 0.3%, in light transmission spectrum, absorption peak in wavelength range of 325 nm or more and 375 nm or less, and transmittance at 355 nm of 57.89%
PC: "Iupilon H-3000", available from Mitsubishi Engineering-Plastics Corporation, glass transition temperature: 158°C, in light transmission spectrum, transmittance at 355 nm of 89.30%
PE: "ULTZEX 2021L", available from Prime Polymer Co., Ltd., LLDPE, in light transmission spectrum, transmittance at 355 nm of 88.56%
ISP: resin composition obtained by melt-kneading polycarbonate resin obtained through melt polymerization method of isosorbide and 1,4-cyclohexanedimethanol used as dihydroxy compound at ratio of structural unit derived from isosorbide/structural unit derived from 1,4-cyclohexanedimethanol = 50/50 (% by mol), with 0.01% by mass of benzotriazole based ultraviolet ray absorbent, 0.1% by mass of hindered phenol based antioxidant, and 0.03% by mass of phosphite based thermal stabilizer, glass transition temperature: 108°C, in light transmission spectrum, absorption peak in wavelength range of 325 nm or more and 375 nm or less, and transmittance at 355 nm of 71.82%
Magenta coloring agent: leuco colorant, "RED 40", available from Yamamoto Chemicals Inc., crystalline melting temperature: 164°C, thermal decomposition temperature: 291°C, 3,3-bis(1-n-butyl-2-methyl-3-indolyl)phthalide
Yellow coloring agent: leuco colorant, "H-29005", available from YAMADA CHEMICAL CO., LTD., crystalline melting temperature: 151°C, thermal decomposition temperature: 347°C, 4-[2,6-bis(2,4-diethoxyphenyl)-4-pyridyl]-N,N-dimethylaniline
Cyan coloring agent: leuco colorant, "CVL", available from YAMADA CHEMICAL CO., LTD., crystalline melting temperature: 186°C, thermal decomposition temperature: 346°C, 6-(dimethylamino)-3,3-bis[4-(dimethylamino)phenyl]-1(3H)-isobenzofuranone
Developer: 2,3,4,5,6-pentabromotoluene, test reagent, crystalline melting temperature: 290°C, thermal decomposition temperature: N.D. (exceeding 350°C)

### [Films 1 to 7]

In "Labo Plastomill 4C150", available from Toyo Seiki Seisaku-sho, Ltd., the materials were placed at the prescribed ratio shown in Table 1, and melt-kneaded at 200°C and 60 rpm for 5 minutes to provide a resin composition, which was then press-molded at 200°C with a heat pressing machine, "IMC-18DA", available from IMOTO MACHINERY CO., LTD., to produce films 1 to 7 having a thickness of 300 µm. In the films 1 to 7, the resin composition (X) excluding the coloring agent and the resin composition (Y) excluding the coloring agent and the developer have an absorption peak in a wavelength range of 325 nm or more and 375 nm or less in the light transmission spectrumdue to the presence of PMMA contained therein.

### [Films 8 to 14]

In "Labo Plastomill 4C150", available from Toyo Seiki Seisaku-sho, Ltd., the materials were placed at the prescribed ratio shown in Table 1, and melt-kneaded at 230°C and 60 rpm for 5 minutes to provide a resin composition, which was then press-molded at 230°C with a heat pressing machine, "IMC-18DA", available from Imoto Machinery Co., Ltd., to produce films 8 to 14 having a thickness of 300 µm. In the films 8 to 14, the resin composition (X) excluding the coloring agent and the resin composition (Y) excluding the coloring agent and the developer do not have an absorption peak in a wavelength range of 235 nm or more and 475 nm or less.

### [Films 15 to 17]

In "Labo Plastomill 4C150", available from Toyo Seiki Seisaku-sho, Ltd., the materials were placed at the prescribed ratio shown in Table 1, and melt-kneaded at 240°C and 60 rpm for 5 minutes to provide a resin composition, which was then press-molded at 240°C with a heat pressing machine, "IMC-18DA", available from Imoto Machinery Co., Ltd., to produce films 15 to 17 having a thickness of 300 µm. In the films 15 to 17, the resin composition (X) excluding the coloring agent and the resin composition (Y) excluding the coloring agent and the developer have an absorption peak in a wavelength range of 325 nm or more and 375 nm or less in the light transmission spectrum due to the presence of ISP contained therein.

### [Film 18]

In "Labo Plastomill 4C150", available from Toyo Seiki Seisaku-sho, Ltd., the materials were placed at the prescribed ratio shown in Table 1, and melt-kneaded at 200°C and 60 rpm for 5 minutes to provide a resin composition, which was then press-molded at 200°C with a heat pressing machine, "IMC-18DA", available from Imoto Machinery Co., Ltd., to produce a film 18 having a thickness of 50 µm. In the film 18, the resin composition (X) excluding the coloring agent and the resin composition (Y) excluding the coloring agent and the developer do not have an absorption peak in a wavelength range of 235 nm or more and 475 nm or less.

### [Evaluation Methods]

### (Color Developability in forming Color Developing Layer)

The resulting films 1 to 18 were visually observed for evaluating the color developability in forming the color developing layer according to the following evaluation standard.
A: No color development observed, or color development in practically acceptable range observed
B: Color development observed

### (Laser Color Developability)

Laser printing in a size of 10 mm × 10 mm was performed on each of the films with "3-Axis UV Laser Marker MD-U1000C", available from KEYENCE CORPORATION, under condition of a wavelength of 355 nm, power of 0.5 W, a scanning speed of 1,000 mm/s, a frequency of 40 kHz, a hunting pitch of 40 µm, a scanning direction crossing of 0°/90°, and a heat amount of 2.64 J/pcs. The color developability after the laser printing was confirmed and evaluated by the following evaluation standard.
AA: Significantly clear color development observed on laser irradiation area after laser printing
A: Clear color development observed on laser irradiation area after laser printing
B: Slightly unclear color development observed on laser irradiation area after laser printing
C: No color development observed on laser irradiation area after laser printing

### (Color Difference and Transmittance)

The films each were subjected to the laser printing in the same manner as in the evaluation of laser color developability, and then subjected to the measurement of the color difference between before irradiation and after irradiation of laser light and the spectrophotometry under the following measurement condition. The a* value, the b* value, and the transmittances (T) at a wavelength of 430 nm, 540 nm, and 600 nm before the laser irradiation are shown in Table 1. The value Δa* obtained by subtracting the a* value before the irradiation from the a* value after the irradiation, and the value Δb* obtained by subtracting the b* value before the irradiation from the b* value after the irradiation are shown in Table 1. Larger values of Δa* and Δb* show better color developability of the coloring agent.

The color difference ΔE before and after the irradiation was calculated, and the values ΔT were obtained by subtracting the transmittance (T) at a wavelength of 430 nm, 540 nm, and 600 nm after the irradiation from the transmittance (T) at a wavelength of 430 nm, 540 nm, and 600 nm before the irradiation, respectively. The resulting values are shown in Table 1. Larger values of ΔE and ΔT show a larger contrast between the printed part and the non-printed part and better laser color developability. At this time, the wavelength of the absorption peak varies depending on the kind of the coloring agent, and therefore the values of T and ΔT were calculated for the wavelength at which ΔT was expected to be large due to the color development of the coloring agent (i.e., the absorption peak derived from the coloring agent in the light transmission spectrum). Specifically, the values of T and ΔT were measured at 430 nm in the case where the yellow coloring agent was used, the values of T and ΔT were measured at 540 nm in the case where the magenta coloring agent was used, and the values of T and ΔT were measured at 600 nm in the case where the cyan coloring agent was used.

### (Color Difference Measurement)

Device name: "Cary 7000", a spectrophotometer, available from Agilent Technologies, Inc., measured wavelength range: 360 to 830 nm, light source: C, view field: 2 degree, transmission method

### (Spectrophotometry)

Device name: "Cary 7000", a spectrophotometer, available from Agilent Technologies, Inc., light transmittance measurement, measured wavelength range: 200 to 800 nm, transmission method

The measurement of the light transmission spectra of the resin materials was performed for a film having a thickness of 300 µm obtained by press-molding the resin material with a heat pressing machine, "IMC-18DA", available from Imoto Machinery Co., Ltd., at 200°C for PMMA and PE, 230°C for PC, or 240°C for ISP. The measurement was performed with "Cary 7000", a spectrophotometer, available from Agilent Technologies, Inc., in a wavelength range of 200 to 800 nm.

**Table 1**

| Film No. | | 1 | 2 | 3 | 4 | 5 | 6 | 7 | 8 | 9 | 10 | 11 | 12 | 13 | 14 | 15 | 16 | 17 | 18 |
|---|---|---|---|---|---|---|---|---|---|---|---|---|---|---|---|---|---|---|---|
| Formulation (part by mass) | PMMA | 100 | 100 | 100 | 100 | 100 | 100 | 100 | | | | | | | | | | | |
| | PC | | | | | | | | 100 | 100 | 100 | 100 | 100 | 100 | 100 | | | | |
| | PE | | | | | | | | | | | | | | | | | | 100 |
| | ISP | | | | | | | | | | | | | | | 100 | 100 | 100 | |
| | Magenta coloring agent | 1 | | | 1 | 1 | | 1 | 1 | | | 1 | 1 | | 1 | 1 | | | 1 |
| | Yellow coloring agent | | 1 | | 1 | | 1 | 1 | | 1 | | 1 | | 1 | 1 | | 1 | | |
| | Cyan coloring agent | | | 1 | | 1 | 1 | 1 | | | 1 | | 1 | 1 | 1 | | | 1 | |
| | Developer | 1 | 1 | 1 | 2 | 2 | 2 | 3 | 1 | 1 | 1 | 2 | 2 | 2 | 3 | 1 | 1 | 1 | 1 |
| Evaluation | Color development in molding | A | A | A | A | A | A | A | A | A | A | A | A | A | A | A | A | A | A |
| | Laser color developability | AA | AA | AA | AA | AA | AA | AA | A | A | A | AA | AA | AA | AA | AA | AA | AA | B |
| Color difference | a* before irradiation | -0.18 | -6.15 | -0.28 | -5.94 | -1.04 | -7.30 | -2.68 | -0.94 | -1.30 | -0.49 | -2.10 | -1.36 | -1.90 | -2.19 | -5.02 | -1.63 | -0.16 | 0.05 |
| | b* before irradiation | 1.13 | 13.47 | 0.77 | 13.73 | 3.24 | 17.28 | 5.82 | 3.20 | 3.17 | 1.24 | 5.73 | 3.83 | 4.86 | 5.66 | 13.73 | 5.91 | 2.96 | 1.12 |
| | ΔE | 7.77 | 9.87 | 15.41 | 13.53 | 14.75 | 15.03 | 20.85 | 5.34 | 12.69 | 5.85 | 18.26 | 12.45 | 17.14 | 18.35 | 34.06 | 46.20 | 25.54 | 3.51 |
| | Δa* | 6.58 | -2.08 | -0.88 | -1.46 | 2.34 | -5.21 | -7.58 | 4.03 | -4.61 | -2.97 | -3.14 | -1.78 | -8.72 | -7.54 | 28.73 | -13.79 | -2.53 | 0.99 |
| | Δb* | -1.95 | 8.01 | -6.87 | 11.44 | -6.37 | 9.50 | 17.07 | 0.00 | 11.78 | -2.46 | 15.61 | -4.19 | 11.40 | 13.91 | -12.13 | 44.09 | -17.05 | 1.74 |
| Transmittance | T before irradiation (%) at 430 nm | | 67.19 | | 65.45 | | 58.11 | 69.15 | | 80.57 | | 75.95 | | 76.07 | 70.68 | | 85.06 | | |
| | ΔT (%) at 430 nm | | 26.00 | | 31.07 | | 30.57 | 35.28 | | 33.16 | | 40.86 | | 36.30 | 35.20 | | 30.72 | | |
| | T before irradiation (%) at 540 nm | 89.95 | | | 89.73 | 88.72 | | 89.65 | 88.72 | | | 86.57 | 86.18 | | 85.62 | 91.12 | | | 84.01 |
| | ΔT (%) at 540 nm | 14.48 | | | 17.43 | 29.14 | | 19.52 | 12.74 | | | 20.18 | 23.74 | | 17.90 | 21.74 | | | 4.52 |
| | T before irradiation (%) at 600 nm | | | 89.87 | | 89.55 | 89.75 | 89.93 | | | 87.36 | | 86.91 | 87.10 | 86.61 | | | 91.56 | |
| | ΔT (%) at 600 nm | | | 35.87 | | 30.57 | 25.09 | 20.95 | | | 25.35 | | 28.53 | 23.24 | 21.03 | | | 21.15 | |

As shown by the films 1 to 18, the films each contained the prescribed amount of the coloring agent, and thereby developed color through irradiation of laser light having the prescribed wavelength (355 nm) without color development in kneading the components and in molding the film. The films 1, 8, 15, and 18 each developed a magenta color, the films 2, 9, and 16 each developed a yellow color, and the films 3, 10, and 17 each developed a cyan color. The films 4 to 7 and 11 to 14 each developed a mixed color of two or more colors among them. Accordingly, it is expected that a laminate enabling multicolor laser printing by properly laminating the films and using inner marking can be provided.

The films 1 to 7 and the films 15 to 17 each contained the resin and the coloring agent, in which the resin composition excluding the coloring agent had an absorption peak in a wavelength range of 235 nm or more and 475 nm or less, and thereby developed color with high color developability through irradiation of laser light having a wavelength in the ultraviolet ray region.

The films 15 to 17 each used the polycarbonate resin containing a structural unit derived from the dihydroxy compound having a moiety represented by the formula (1) as the resin, and thereby showed an increased ΔE between before and after the irradiation of laser light, resulting in significantly good color developability.

### Reference Sign List

11A, 11B, 11C: Color developing layer
12A, 12B: Intermediate layer
21, 22, 23, 24: Laminate

## Claims

1. A laminate comprising at least two layers that develop different colors from each other,
the at least two layers each containing a resin and a coloring agent,
the at least two layers each having a content of the coloring agent of less than 10 parts by mass per 100 parts by mass of the resin.

2. A laminate comprising at least two layers that develop different colors from each other,
the at least two layers each containing a resin and a coloring agent,
a resin composition excluding the coloring agent in at least one layer of the at least two layers having an absorption peak of a light transmission spectrum in a wavelength range of 235 nm or more and 475 nm or less.

3. A laminate comprising at least two layers that develop different colors from each other,
the at least two layers each containing a resin and a coloring agent,
the resin in at least one layer of the at least two layers containing a polycarbonate resin containing a structural unit derived from a dihydroxy compound having a moiety represented by the following formula (1) in a part of a structure: 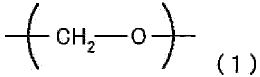 provided that a case where the moiety represented by the formula (1) is a part of -CH₂-O-H is excluded.

4. The laminate according to claim 2 or 3, wherein the at least two layers each have a content of the coloring agent of less than 10 parts by mass per 100 parts by mass of the resin.

5. The laminate according to any one of claims 1 to 4, wherein at least one layer of the at least two layers contains an ultraviolet ray absorbent.

6. The laminate according to any one of claims 1 to 5, wherein at least one layer of the at least two layers has a thickness of more than 5 µm and 320 µm or less.

7. The laminate according to any one of claims 1 to 6, wherein the at least two layers are directly laminated.

8. The laminate according to any one of claims 1 to 7, wherein the coloring agent is a leuco colorant.

9. The laminate according to any one of claims 1 to 8, wherein at least one layer of the at least two layers contains a developer.

10. The laminate according to claim 9, wherein the at least one layer has a content of the developer of 30 parts by mass or less per 100 parts by mass of the resin.

11. The laminate according to claim 9 or 10, wherein the developer has a thermal decomposition temperature of 200°C or more.

12. The laminate according to any one of claims 9 to 11, wherein the developer has a crystalline melting temperature of 100°C or more.

13. The laminate according to any one of claims 9 to 12, wherein the developer has a crystalline melting temperature of 350°C or less.

14. The laminate according to any one of claims 9 to 13, wherein the developer is an organic halogen compound.

15. The laminate according to any one of claims 1 to 14, wherein the coloring agent has a thermal decomposition temperature of 200°C or more.

16. The laminate according to any one of claims 1 to 15, wherein the coloring agent has a crystalline melting temperature of 100°C or more.

17. The laminate according to any one of claims 1 to 16, wherein the coloring agent has a crystalline melting temperature of 300°C or less.

18. The laminate according to any one of claims 1 to 17, wherein a resin composition excluding the coloring agent in at least one layer of the at least two layers has an absorption peak of a light transmission spectrum in a wavelength range of 235 nm or more and 475 nm or less.

19. The laminate according to any one of claims 1 to 18, wherein the resin in at least one layer of the at least two layers contains a thermoplastic resin.

20. The laminate according to any one of claims 1 to 19, wherein the resin in at least one layer of the at least two layers contains at least one kind selected from the group consisting of a polycarbonate resin, a polyester resin, a polyolefin resin, and an acrylic resin.

21. The laminate according to any one of claims 1 and 3 to 20, wherein the resin in at least one layer of the at least two layers contains a resin having an absorption peak of a light transmission spectrum in a wavelength range of 235 nm or more and 475 nm or less.

22. The laminate according to any one of claims 1 to 21, wherein the resin in at least one layer of the at least two layers contains a bisphenol based polycarbonate resin.

23. The laminate according to any one of claims 1, 2, and 4 to 22, wherein the resin in at least one layer of the at least two layers contains a polycarbonate resin containing a structural unit derived from a dihydroxy compound having a moiety represented by the following formula (1) in a part of a structure: 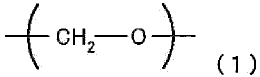 provided that a case where the moiety represented by the formula (1) is a part of -CH₂-O-H is excluded.

24. The laminate according to any one of claims 1 to 6 and 8 to 23, comprising an intermediate layer between one pair of layers adjacent to each other in the at least two layers.

25. The laminate according to any one of claims 1 to 24, wherein the laminate is capable of developing multiple colors through irradiation of laser light having any one wavelength in a wavelength range of 200 nm or more and 1,500 nm or less.

26. The laminate according to claim 25, wherein the wavelength is less than 780 nm.

27. The laminate according to any one of claims 1 to 26, wherein the different colors are at least two selected from a cyan color, a magenta color, and a yellow color.

28. The laminate according to any one of claims 1 to 27, wherein the laminate has an area of 400 cm² or less.

29. The laminate according to any one of claims 1 to 28, wherein the laminate has an area of 200 cm² or less.

30. The laminate according to any one of claims 1 to 29, wherein the laminate is used in a card.

31. The laminate according to any one of claims 1 to 29, wherein the laminate is used in a passport.

32. A card comprising the laminate according to any one of claims 1 to 30.

33. A passport comprising the laminate according to any one of claims 1 to 29 and 31.

34. A method of producing the laminate according to any one of claims 1 to 31, comprising melt-kneading at least a resin and a coloring agent to produce at least two resin compositions, and forming the at least two layers with the resin compositions, respectively.

35. The method of producing the laminate according to claim 34, comprising a step of laminating the at least two layers.

36. The method of producing the laminate according to claim 35, wherein the step of laminating the at least two layers is performed by an extrusion method or a lamination method.

37. A method of producing a laminate including at least two layers that develop different colors from each other,
the method of producing a laminate, comprising melt-kneading at least a resin and a coloring agent to produce at least two resin compositions, and laminating layers formed from the resin composition by an extrusion method or a lamination method, so as to produce the laminate.

38. The method of producing the laminate according to claim 37, wherein at least a resin and a coloring agent are melt-kneaded at 140°C or more and 350°C or less.

39. The method of producing the laminate according to claim 37 or 38, wherein a temperature when the layers are laminated by an extrusion method or a lamination method is 140°C or more and 350°C or less.

40. A laser marking method comprising laser marking the laminate according to any one of claims 1 to 31 through laser irradiation.

41. A laser marking method comprising laser marking a laminate produced by the method of producing a laminate according to any one of claims 34 to 39 through laser irradiation.

42. The laser marking method according to claim 40 or 41, wherein the laser marking is performed through inner marking to allow at least one layer of the at least two layers to develop color.

43. The laser marking method according to any one of claims 40 to 42, wherein at least one layer of the at least two layers contains a resin having an absorption peak in a wavelength range of (λ-120) nm or more and (λ+120) nm or less, wherein λ nm represents a wavelength of laser light used in the laser irradiation.

44. The laser marking method according to any one of claims 40 to 43, wherein a resin composition excluding the coloring agent in at least one layer of the at least two layers has an absorption peak in a wavelength range of (λ-120) nm or more and (λ+120) nm or less, wherein λ nm represents a wavelength of laser light used in the laser irradiation.

45. A method of producing a card including the laminate according to any one of claims 1 to 30,
the method of producing a card, comprising at least a step of laminating and fusing the laminate with another film, and a step of laser marking through laser irradiation.

46. A method of producing a passport including the laminate according to any one of claims 1 to 29 and 31,
the method of producing a passport, comprising at least a step of laminating and fusing the laminate with another film, and a step of laser marking through laser irradiation.

47. A method of using the laminate according to any one of claims 1 to 31 in a card or a passport, comprising laser marking the laminate.

48. Use of the laminate according to any one of claims 1 to 31 in a card or a passport, comprising laser marking the laminate.

49. A laser marking method comprising laser marking a laminate including at least two layers that develop different colors from each other,
the laser marking being performed through inner marking to allow at least one layer of the at least two layers to develop color.

50. The laser marking method according to claim 49, wherein the laser marking method is capable of developing multiple colors through irradiation of laser light having one wavelength.

51. The laser marking method according to claim 49 or 50, wherein at least one layer of the at least two layers contains a resin having an absorption peak in a wavelength range of (λ-120) nm or more and (λ+120) nm or less, wherein λ nm represents a wavelength of laser light used in the inner marking.

52. The laser marking method according to any one of claims 49 to 51, wherein a resin composition excluding the coloring agent in at least one layer of the at least two layers has an absorption peak in a wavelength range of (λ-120) nm or more and (λ+120) nm or less, wherein λ nm represents a wavelength of laser light used in the inner marking.
